(19) Europäisches Patentamt
European Patent Office
Office européen des brevets

(11) Veröffentlichungsnummer: **0 671 442 A2**

# (12) EUROPÄISCHE PATENTANMELDUNG

(21) Anmeldenummer: **95103032.9**

(51) Int. Cl.[6]: **C09B 62/09**

(22) Anmeldetag: **03.03.95**

(30) Priorität: **11.03.94 DE 4408197**

(43) Veröffentlichungstag der Anmeldung: **13.09.95 Patentblatt 95/37**

(84) Benannte Vertragsstaaten: **CH DE FR GB IT LI**

(71) Anmelder: **BASF AKTIENGESELLSCHAFT**
**D-67056 Ludwigshafen (DE)**

(72) Erfinder: **Löffler, Hermann**
**Haydnstr. 23**
**D-67346 Speyer (DE)**
Erfinder: **Patsch, Manfred, Dr.**
**Fritz-Wendel-Str. 4**
**D-67157 Wachenheim (DE)**

(54) **Reaktive Disazofarbstoffe mit zwei Ankern auf Basis von Cyanurchlorid.**

(57) Disazofarbstoffe der Formel

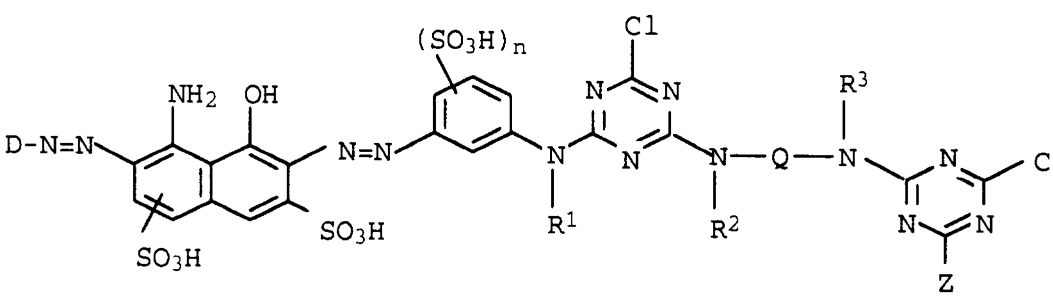

,

in der

| | |
|---|---|
| n | 0,1 oder 2, |
| D | den Rest einer Diazokomponente, die frei ist von faserreaktiven Gruppen, |
| $R^1$, $R^2$ und $R^3$ | Wasserstoff oder gegebenenfalls substituiertes $C_1$-$C_4$-Alkyl, |
| Z | Chlor oder gegebenenfalls substituiertes Amino und |
| Q | Hydroxysulfonylphenylen bedeuten, |

sowie deren Verwendung zum Bedrucken von cellulosehaltigen Materialien.

EP 0 671 442 A2

Die vorliegende Erfindung betrifft neue Disazofarbstoffe der Formel I

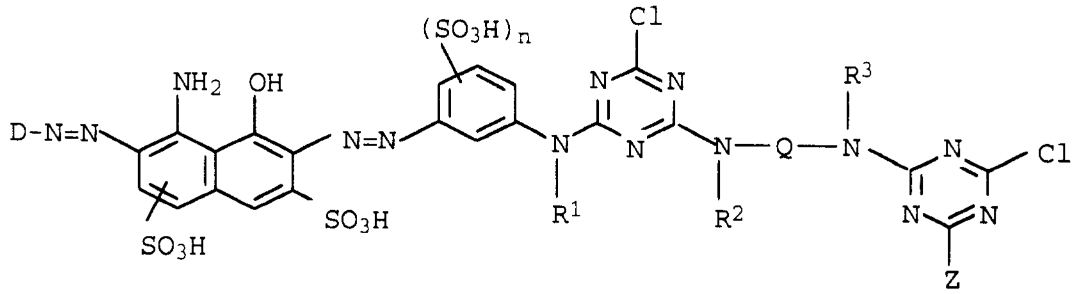

(I),

in der

- n — 0,1 oder 2,
- D — gegebenenfalls substituiertes Phenyl oder gegebenenfalls substituiertes Naphthyl, wobei beide Reste frei sind von faserreaktiven Gruppen,
- $R^1$, $R^2$ und $R^3$ — unabhängig voneinander jeweils Wasserstoff oder gegebenenfalls substituiertes $C_1$-$C_4$-Alkyl,
- Z — Chlor oder einen Rest der Formel $NR^4R^5$, worin $R^4$ für Wasserstoff oder gegebenenfalls substituiertes $C_1$-$C_4$-Alkyl und $R^5$ für Wasserstoff, gegebenenfalls substituiertes $C_1$-$C_4$-Alkyl oder gegebenenfalls substituiertes Phenyl stehen, und
- Q — einen Rest der Formel

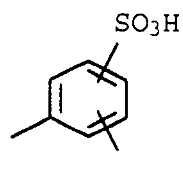

bedeuten,

mit der Maßgabe, daß

a) fünf bis sieben wasserlöslich machende Gruppen im Molekül vorhanden sind und

b) wenn Z den Rest $NR^4R^5$, $R^3$ gegebenenfalls substituiertes $C_1$-$C_4$-Alkyl und $R^1$, $R^2$ und $R^4$ jeweils Wasserstoff bedeuten, der Rest $NR^2$-Q-$NR^3$ nicht die Struktur

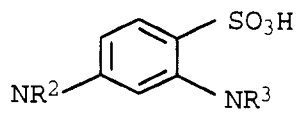

aufweist, sowie deren Verwendung zum Bedrucken von cellulosehaltigen Materialien.

Aus der US-A-5 149 789 und DE-A-2 109 879 sind Azofarbstoffe bekannt, die über eine ähnliche Struktur wie die obengenannten Farbstoffe verfügen. Die dort genannten Farbstoffe weisen aber Nachteile in ihren anwendungstechnischen Eigenschaften auf.

Aufgabe der vorliegenden Erfindung war es nun, neue reaktive Disazofarbstoffe mit zwei Ankern auf Basis von Cyanurchlorid bereitzustellen. Die neuen Farbstoffe sollten bei ihrer Anwendung als Druckfarbstoffe für cellulosehaltiges Material nach erfolgtem Druck leicht und vollständig auswaschbar sein und den Weißfond nicht anfärben. Sie sollten weiterhin auf Baumwolle und Zellwolle Drucke von gleicher Intensität ergeben und dabei auf beiden Substraten hohe Fixierausbeuten aufweisen.

Demgemäß wurden die eingangs näher bezeichneten Disazofarbstoffe der Formel I gefunden.

Wasserlöslich machende Gruppen sind insbesondere die Hydroxysulfonyl- oder Carboxygruppe.

Alle in der obengenannten Formel I auftretenden Alkylgruppen können sowohl geradkettig als auch verzweigt sein.

Wenn in der obengenannten Formel I substituierte Phenyl- oder Naphthylreste auftreten, so können als Substituenten z.B. $C_1$-$C_4$-Alkyl, $C_1$-$C_4$-Alkoxy, Amino, Halogen, Hydroxysulfonyl, Carboxy, Sulfamoyl, $C_1$-$C_4$-Mono- oder Dialkylsulfamoyl, dessen Alkylreste gegebenenfalls durch Hydroxy substituiert sind, oder $C_1$-$C_4$-Alkylsulfonyl, das gegebenenfalls durch Hydroxy substituiert ist, in Betracht kommen. Die substituierten Phenyl- oder Naphthylreste weisen in der Regel 1 bis 3 Substituenten auf.

Wenn in der obengenannten Formel I substituierte Alkylreste auftreten, so können als Substituenten, sofern nichts anderes vermerkt, z.B. Hydroxy, $C_1$-$C_4$-Alkoxy, Hydroxy-$C_1$-$C_4$-alkoxy, Sulfato, Halogen, $C_1$-$C_4$-Alkoxycarbonyl, Cyano, Carboxy oder Hydroxysulfonyl in Betracht kommen. Die substituierten Alkylreste weisen in der Regel 1 oder 2 Substituenten auf.

Geeignete Diazokomponenten D-$NH_2$, von denen sich der Rest D ableitet, sind z.B. Anilin, 2-Methoxyanilin, 2-Methylanilin, 4-Methoxyanilin, 4-Methylanilin, 2-Methoxy-5-methylanilin, 2,5-Dimethoxyanilin, 2,4- oder 2,5-Dimethylanilin, 2,5-Diethoxyanilin, 2-, 3- oder 4-Chloranilin, 2,5-Dichloranilin, 4-Chlor-2-methylanilin, 3-Chlor-2-methylanilin, 4-Chlor-2-aminotoluol, Anilin-2-, -3- oder -4-sulfonsäure, Ahilin-2,4-disulfonsäure, Anilin-2,5-disulfonsäure, Ahilin-3,5-disulfonsäure, 2-Aminotoluol-4-sulfonsäure, 2-Methoxyanilin-5-sulfonsäure, 3-Methoxyanilin-4-sulfonsäure, 2-Methoxyanilin-4-sulfonsäure, 2,5-Dimethoxyanilin-4-sulfonsäure, 2,4-Dimethoxyanilin-5-sulfonsäure, 2-Methoxy-5-methylanilin-4-sulfonsäure, 4-Aminotoluol-3-sulfonsäure, 2-Aminotoluol-5-sulfonsäure, 2-Chloranilin-4-sulfonsäure, 2-Chloranilin-5-sulfonsäure, 2,6-Dichloranilin-4-sulfonsäure, 2,6-Dimethylanilin-4-sulfonsäure, 2,6-Dimethylanilin-3-sulfonsäure, 2-, 3- oder 4-Aminobenzoesäure, 4-Methylsulfonylanilin, 2-Aminotoluol-3,5-disulfonsäure, 4-Aminotoluol-2,5-disulfonsäure, 2-Chloranilin-4,6-disulfonsäure, 1- oder 2-Aminonaphthalin, 3- oder 4-(2-Hydroxyethylsulfonyl)anilin, 4-Sulfamoylanilin, 4-Methylsulfamoylanilin, 4-Dimethylsulfamolylanilin, 4-(2-Hydroxyethylsulfamoyl)anilin, 1-Aminonaphthalin-3-, -4-, -5-, -6- oder -7-sulfonsäure, 1-Aminonaphthalin-3,7-disulfonsäure, 2-Aminonaphthalin-5-, -6- oder -8-sulfonsäure, 2-Aminonaphthalin-1,5-disulfonsäure, 2-Aminonaphthalin-1-sulfonsäure, 2-Aminonaphthalin-1,6-disulfonsäure oder 2-Aminonaphthalin-3,6- oder -4,8-disulfonsäure.

Reste $R^1$, $R^2$, $R^3$, $R^4$ und $R^5$ sind z.B. Methyl, Ethyl, Propyl, Isopropyl, Butyl, Isobutyl, sec-Butyl, tert-Butyl, 2-Hydroxyethyl, 2- oder 3-Hydroxypropyl, 2- oder 4-Hydroxybutyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 4-Methoxybutyl, 2- oder 4-Ethoxybutyl, 2-Sulfatoethyl, 2- oder 3-Sulfatopropyl, 2- oder 4-Sulfatobutyl, Cyanomethyl, 2-Cyanoethyl, 2- oder 3-Cyanopropyl, 2- oder 4-Cyanobutyl, 2-Chlorethyl, 2-Bromethyl, 2- oder 3-Chlorpropyl, 2- oder 3-Brompropyl, 2- oder 4-Chlorbutyl, 2- oder 4-Brombutyl, 2-(2-Hydroxyethoxy)-ethyl, Carboxymethyl, 2-Carboxyethyl, 2- oder 3-Carboxypropyl, 2- oder 4-Carboxybutyl, Hydroxysulfonylmethyl, 2-Hydroxysulfonylethyl, 2- oder 3-Hydroxysulfonylpropyl oder 2- oder 4-Hydroxysulfonylbutyl.

Reste $R^5$ sind weiterhin z.B. Phenyl, 2-, 3- oder 4-Methylphenyl, 2-, 3- oder 4-Methoxyphenyl, 2-, 3- oder 4-Hydroxysulfonylphenyl, 2-, 3- oder 4-Carboxyphenyl, 2,4- oder 2,6-Dimethylphenyl, 2,4- oder 2,6-Dimethoxyphenyl, 2-Methoxy-4-methylphenyl, 2-Methyl-4- oder -5-hydroxysulfonylphenyl, 2-Methoxy-4- oder -5-hydroxysulfonylphenyl, 2-Carboxy-4-hydroxysulfonylphenyl, 2,4-Dimethyl-5-hydroxysulfonylphenyl, 2,5-Dimethyl-4-hydroxysulfonylphenyl, 2,5-Dihydroxysulfonylphenyl oder 3-Amino-4-hydroxysulfonylphenyl.

Bevorzugt sind Disazofarbstoffe der Formel I, in der sechs oder sieben wasserlöslich machende Gruppen im Molekül vorhanden sind.

Bevorzugt sind weiterhin Disazofarbstoffe der Formel I, in der Z einen Rest der Formel $NR^4R^5$ bedeutet.

Bevorzugt sind weiterhin Disazofarbstoffe der Formel I, in der Z Chlor bedeutet.

Bevorzugt sind weiterhin Disazofarbstoffe der Formel I, in der die Reste $R^1$, $R^2$, $R^3$ und $R^4$ nicht gleichzeitig Wasserstoff bedeuten, wobei, wenn D für Phenyl steht, das mindestens einen Substituenten aufweist, der sich in ortho-Position zur Azogruppe befindet, auch solche Disazofarbstoffe der Formel I bevorzugt sind, in der $R^1$, $R^2$, $R^3$ und $R^4$ jeweils Wasserstoff bedeuten.

Bevorzugt sind weiterhin Disazofarbstoffe der Formel I, in der drei der Reste $R^1$, $R^2$, $R^3$ und $R^4$ Wasserstoff und einer gegebenenfalls substituiertes $C_1$-$C_4$-Alkyl bedeutet, wobei solche Farbstoffe ausgenommen sind, in der $R^3$ gegebenenfalls substituiertes $C_1$-$C_4$-Alkyl bedeutet.

Wenn die Reste $R^1$, $R^2$, $R^3$ und $R^4$ nicht gleichzeitig Wasserstoff bedeuten, so sind insbesondere folgende Kombinationen zu nennen, wobei "H" Wasserstoff und "A" gegebenenfalls substituiertes $C_1$-$C_4$-Alkyl bedeutet.

| | $R^1$ | $R^2$ | $R^3$ | $R^4$ |
|---|---|---|---|---|
| 1. | H | H | H | A |
| 2. | H | H | A | A |
| 3. | H | A | H | A |
| 4. | H | A | H | H |
| 5. | H | A | A | H |
| 6. | H | A | A | A |
| 7. | A | H | H | H |
| 8. | A | H | H | A |
| 9. | A | H | A | H |
| 10. | A | H | A | A |
| 11. | A | A | H | H |
| 12. | A | A | H | A |
| 13. | A | A | A | H |
| 14. | A | A | A | A |

Bevorzugt sind dabei die Kombinationen 1 bis 10, insbesondere 1 bis 4, 7 und 8, wobei Kombination 1 besonders hervorzuheben ist.

Bevorzugt sind weiterhin Disazofarbstoffe der Formel I, in der $R^1$, $R^2$, $R^3$ und $R^4$ unabhängig voneinander jeweils Wasserstoff oder $C_1$-$C_4$-Alkyl, dabei insbesondere Methyl oder Ethyl, bedeuten.

Bevorzugt sind weiterhin Disazofarbstoffe der Formel I, in der $R^5$ $C_1$-$C_4$-Alkyl, das gegebenenfalls substituiert ist, oder insbesondere Phenyl, das gegebenenfalls ein- bis dreifach durch Methyl, Methoxy, Carboxy oder Hydroxysulfonyl substituiert ist, bedeutet.

Wenn $R^5$ $C_1$-$C_6$-Alkyl bedeutet, so sind solche Alkylreste hervorzuheben, die an dem zum Stickstoffatom benachbarten Kohlenstoffatom eine Verzweigung aufweisen.

Bevorzugt sind weiterhin Disazofarbstoffe der Formel I, in der D gegebenenfalls substituiertes Phenyl, insbesondere Mono- oder Dihydroxysulfonylphenyl bedeutet.

Bevorzugt sind weiterhin Disazofarbstoffe der Formel Ia

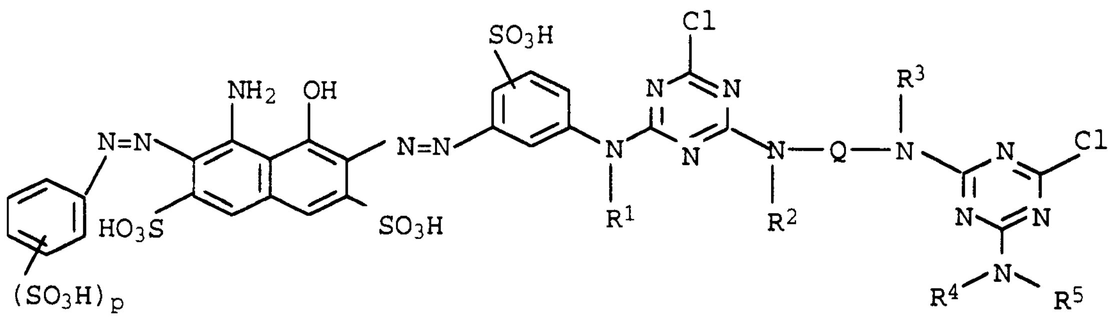

(Ia),

in der p 1 oder 2 bedeutet und Q, $R^1$, $R^2$, $R^4$ und $R^5$ jeweils die obengenannte Bedeutung besitzen.

Besonders bevorzugt sind Disazofarbstoffe der Formel Ib

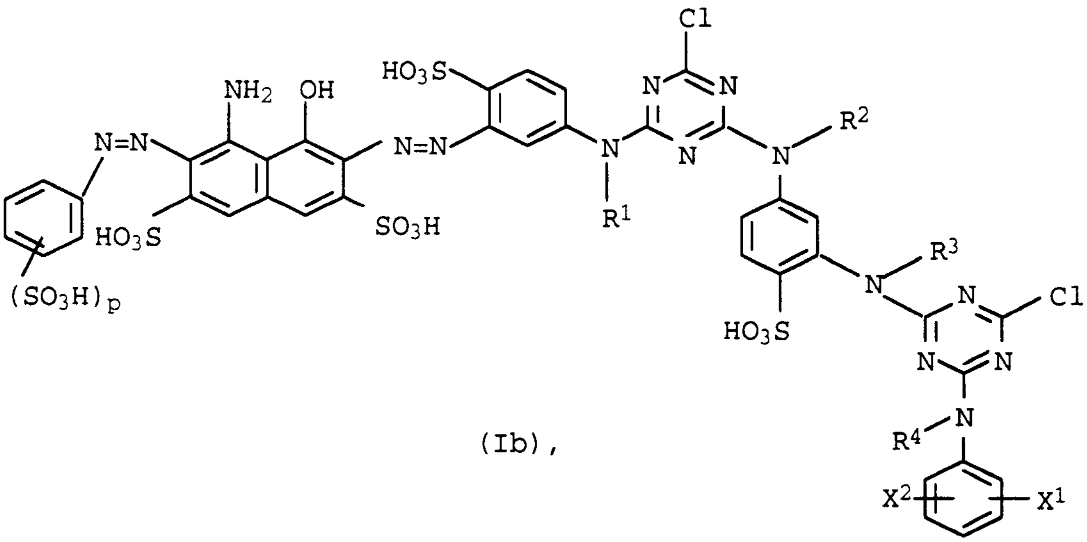

(Ib),

in der p 1 oder 2, $X^1$ Wasserstoff, Carboxy oder Hydroxysulfonyl und $X^2$ Wasserstoff, Methyl, Methoxy, Carboxy oder Hydroxysulfonyl bedeuten und $R^1$, $R^2$, $R^3$ und $R^4$ jeweils die obengenannte Bedeutung besitzen.

Ganz besonders bevorzugt sind Disazofarbstoffe der Formel Ib, in der p, $X^1$ und $X^2$ jeweils die obengenannte Bedeutung besitzen, $R^1$, $R^2$ und $R^3$ jeweils Wasserstoff und $R^4$ Methyl oder Ethyl bedeuten.

Die erfindungsgemäßen Disazofarbstoffe der Formel I können nach an sich bekannten Methoden erhalten werden.

Beispielsweise kann man ein Arylamin der Formel II

$D-NH_2$ (II),

in der D die obengenannte Bedeutung besitzt, auf an sich bekanntem Wege diazotieren und in saurem Milieu mit einem Naphthalin der Formel III

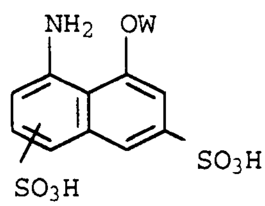

(III)

(W = H) kuppeln. Dabei kann die Selektivität von stark elektrophilen Diazoniumsalzen, die sich vom Arylamin II ableiten, durch Anwendung eines Sulfonylnaphthalins III (W = $SO_2C_6H_5$) gesteigert werden. Nach beendeter Kupplung wird der Benzoylrest dann sauer oder vorzugsweise alkalisch abgespalten.

Das resultierende Zwischenprodukt der Formel IV

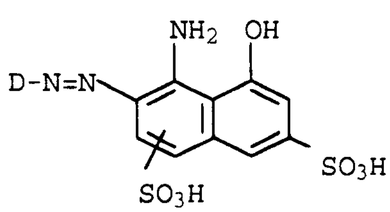

(IV),

in der D die obengenannte Bedeutung besitzt, kann man dann mit einem Diazoniumsalz kuppeln, das sich von einem Triazinylanilin der Formel V

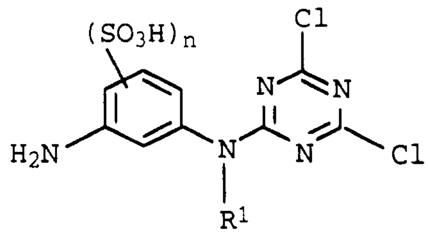

(V)

ableitet, worin n und $R^1$ jeweils die obengenannte Bedeutung besitzen.

Der resultierende Dichlortriazinfarbstoff der Formel VI

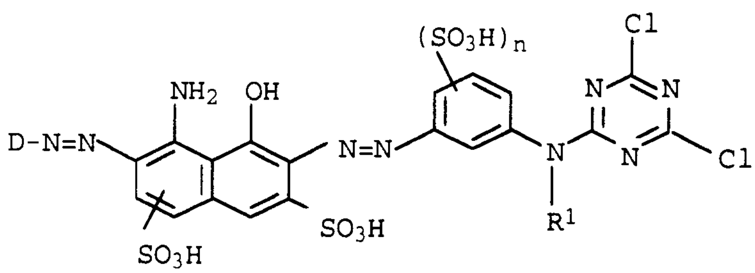

(VI),

in der D, n und $R^1$ jeweils die obengenannte Bedeutung besitzen, kann dann zunächst mit einem Phenylendiamin der Formel VII

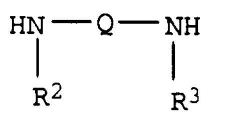

(VII),

in der $R^2$, $R^3$ und Q jeweils die obengenannte Bedeutung besitzen, anschließend mit Cyanurchlorid und schließlich mit einem Amin der Formel VIII

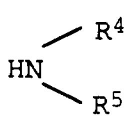

(VIII),

in der $R^4$ und $R^5$ jeweils die obengenannte Bedeutung besitzen, umgesetzt werden.

Es ist auch möglich, die Disazofarbstoffe der Formel I in anderen Teilschritten aufzubauen. So kann man den Dichlortriazinfarbstoff der Formel VI auch direkt mit einer Verbindung der Formel IX

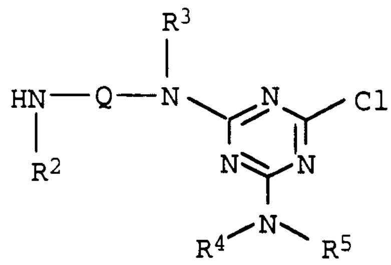

(IX),

in der Q, $R^2$, $R^3$, $R^4$ und $R^5$ jeweils die obengenannte Bedeutung besitzen, umsetzen.

Weiterhin ist es auch möglich, den Dichlortriazinfarbstoff der Formel VI so herzustellen, daß man das Zwischenprodukt IV zunächst mit dem Diazoniumsalz eines Anilins der Formel X

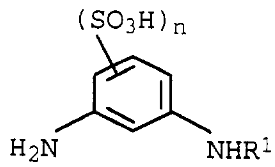

(X),

in der n und $R^1$ jeweils die obengenannte Bedeutung besitzen, kuppelt und dann mit Cyanurchlorid umsetzt.

Die neuen reaktiven Disazofarbstoffe der Formel I eignen sich in vorteilhafter Weise zum Bedrucken von cellulosehaltigem Material, insbesondere von Baumwolle, Zellwolle oder deren Mischgewebe. Sie ergeben dabei Drucke in grünstichig blauen bis rotstichig blauen Farbtönen mit sehr hoher Fixierausbeute. Die erzielten Drucke sind zudem leicht und vollständig auswaschbar, wobei der Weißfond durch das Farbstoffhydrolysat nicht angefärbt wird. Weiterhin sind die Drucke auf Baumwolle und Zellwolle von gleicher Intensität und weisen gute Gebrauchsechtheiten auf.

Die folgenden Beispiele sollen die Erfindung näher erläutern.

Beispiel 1

a) 16,8 g 2-(3'-Amino-4'-hydroxysulfonylphenylamino)-4,6-dichlortriazin (feucht, berechnet als 100 %) wurden in 100 ml Wasser bei einem pH-Wert von 6 aufgerührt. Diese Suspension verdünnte man mit 50 g Eis und ließ nacheinander 15 ml 30 gew.-%ige Salzsäure und 15 ml 3,33 N wäßrige Natriumnitritlösung zufließen. Nach einstündigem Nachrühren bei 5 bis 10 °C und Zerstörung der überschüssigen salpetrigen Säure war die Diazotierung beendet.

Die Suspension des Diazoniumbetains ließ man zur vorgekühlten Lösung des Natriumsalzes von 28 g 1-Amino-8-hydroxy-2-(2',5'-dihydroxysulfonylphenylazo)naphthalin-3,6-disulfonsäure (erhalten durch stark saure Kupplung von diazotierter Anilin-2,5-disulfonsäure mit 1-Amino-8-hydroxynaphthalin-3,6-disulfonsäure) in 300 ml Wasser fließen und stellte mit 25 gew.-%iger wäßriger Natriumacetatlösung einen pH-Wert von 5 ein. Nach zweistündigem Rühren bei 10 bis 15 °C wurde der gebildete Farbstoff der Formel

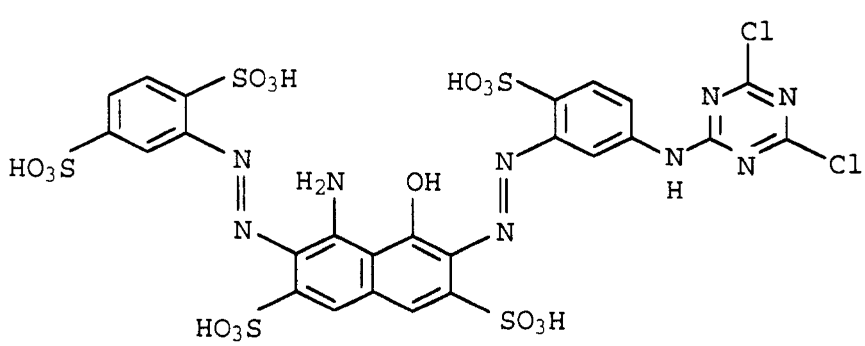

durch Sättigen mit Kaliumchlorid gefällt, abgesaugt und als wasserfeuchtes Nutschgut weiter umgesetzt.

b) Die wäßrige Paste aus Beispiel 1a wurde in 250 ml Wasser bei Raumtemperatur gelöst und mit 8,3 g 3-Aminoanilin-4-sulfonsäure versetzt. In Gegenwart von 10 gew.-%iger, wäßriger Natriumhydrogencarbonatlösung wurde über Nacht gerührt (pH-Wert 4,5). Das erhaltene blaue Zwischenprodukt der Formel

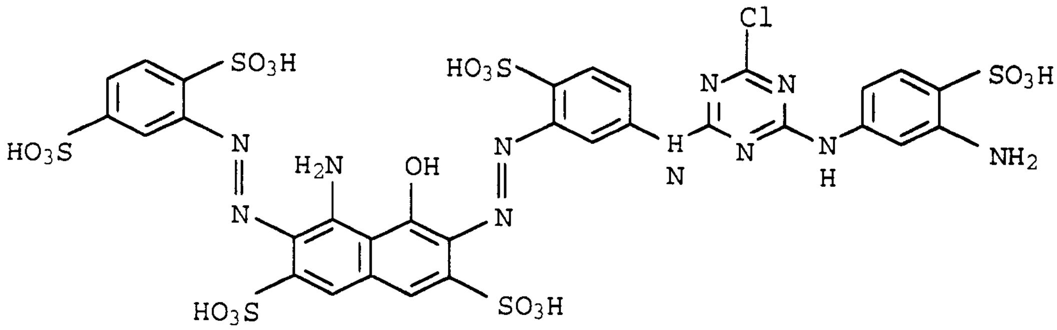

wurde mit 500 ml Ethanol ausgefällt, abgesaugt und nach dem Waschen mit 80 gew.-%igem wäßrigem Ethanol unter vermindertem Druck bei Raumtemperatur getrocknet. Ausbeute: 36 g

c) 24 g des Produkts aus Beispiel 1b wurden in 250 ml Wasser gelöst. Die Lösung wurde mit 4,1 g Cyanurchlorid in acetonischer Lösung 4 h beim Raumtemperatur und bei einem pH-Wert von 4, der mit Natriumhydrogencarbonat eingestellt wurde, gerührt. Nach beendeter Acylierung gab man 3,0 g N-Ethylanilin in acetonischer Lösung zu und rührte über Nacht bei Raumtemperatur und bei einem pH-Wert von 6. Die Syntheselösung wurde sprühgetrocknet.

Das salzhaltige Pulver enthält neben geringen Anteilen an Zwischenstufen und deren Hydrolysat 23 g Farbstoff der Formel

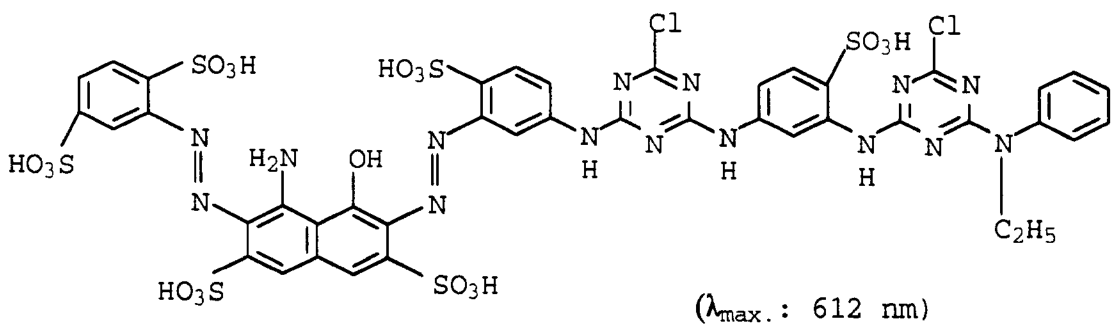

($\lambda_{max.}$: 612 nm)

Analog Beispiel 1 werden die in Struktur und Eigenschaften sehr ähnlichen Farbstoffe der Tabelle 1 erhalten, deren Nuance nur über den Rest D sichtbar beeinflußt wird:

| | | |
|---|---|---|
| D = | 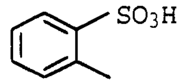 | grünstichiges Marineblau |
| D = | 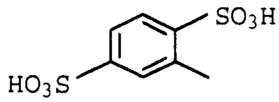 | grünstichiges Marineblau |
| D = | 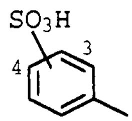 | rotstichiges Marineblau |

Tabelle 1

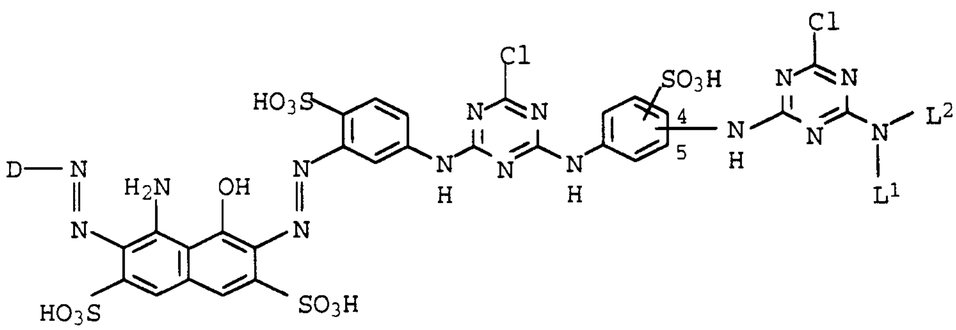

Die Sulfonsäure- und die Aminogruppe besetzen alternierend die Ringpositionen 4 und 5.

| Bsp. Nr. | D | Ringposition der Aminogruppe | $L^1$ | $L^2$ |
|---|---|---|---|---|
| 2 | 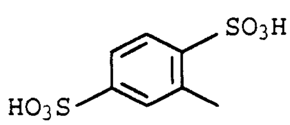 | 5 | $CH_3$ | 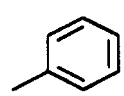 |
| 3 | 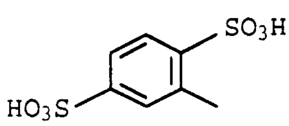 | 4 | $C_2H_5$ | 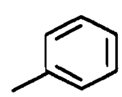 |

| Bsp. Nr. | D | Ringposition der Aminogruppe | $L^1$ | $L^2$ |
|---|---|---|---|---|
| 4 | 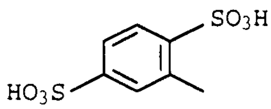 | 5 | $C_2H_5$ | 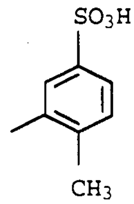 |
| 5 | 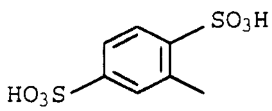 | 5 | $CH_3$ | 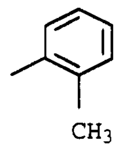 |
| 6 | 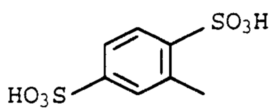 | 5 | $C_2H_5$ | 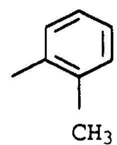 |
| 7 | 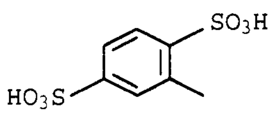 | 5 | $CH_3$ | 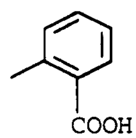 |
| 8 | 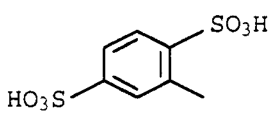 | 4 | $CH_3$ | 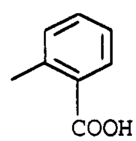 |
| 9 | 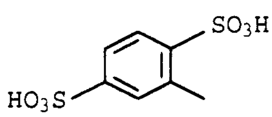 | 5 | $CH_3$ | 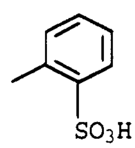 |
| 10 | 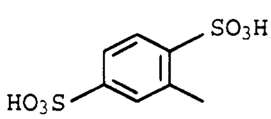 | 5 | $C_2H_5$ | 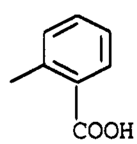 |

| Bsp. Nr. | D | Ringposition der Aminogruppe | $L^1$ | $L^2$ |
|---|---|---|---|---|
| 11 | 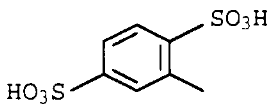 | 4 | $C_2H_5$ | 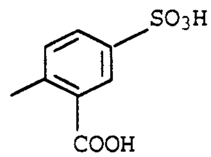 |
| 12 | 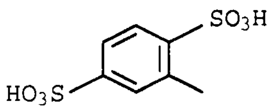 | 5 | H | 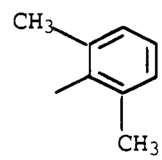 |
| 13 | 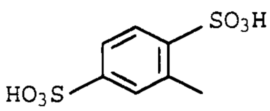 | 5 | $CH_3$ | 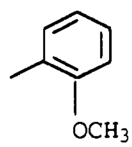 |
| 14 | 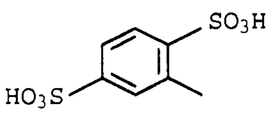 | 5 | $C_2H_5$ | 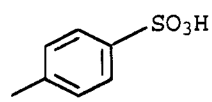 |
| 15 | 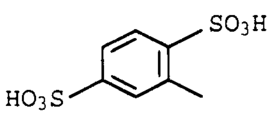 | 4 | $C_2H_5$ | 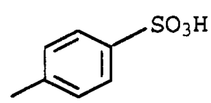 |
| 16 | 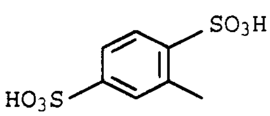 | 5 | $CH_3$ | 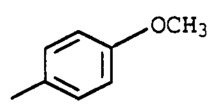 |
| 17 | 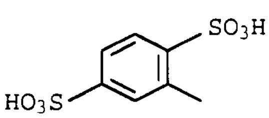 | 4 | H | 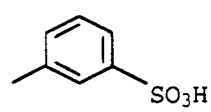 |

| Bsp. Nr. | D | Ringposition der Aminogruppe | $L^1$ | $L^2$ |
|---|---|---|---|---|
| 18 | 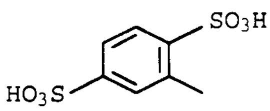 | 4 | H | 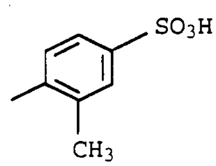 |
| 19 | 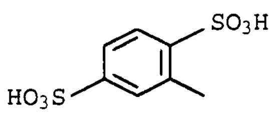 | 4 | H | 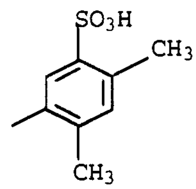 |
| 20 | 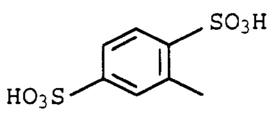 | 5 | H | 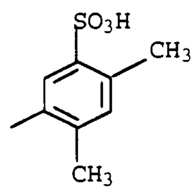 |
| 21 | 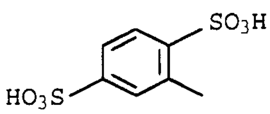 | 4 | H | 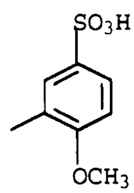 |
| 22 | 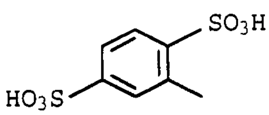 | 4 | H | 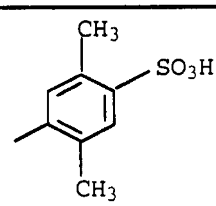 |
| 23 | 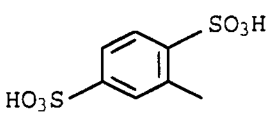 | 5 | H | 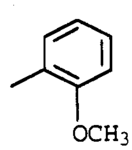 |
| 24 | 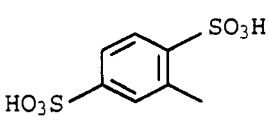 | 5 | H | 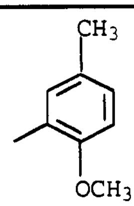 |

| Bsp. Nr. | D | Ringposition der Aminogruppe | $L^1$ | $L^2$ |
|---|---|---|---|---|
| 25 | 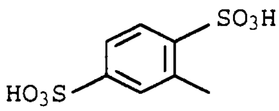 | 5 | $C_2H_4OCH_3$ | 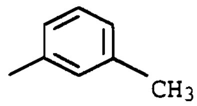 |
| 26 | 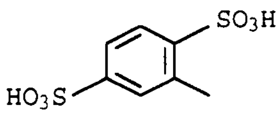 | 5 | $C_2H_4OCH_3$ | 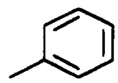 |
| 27 | 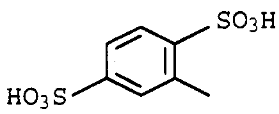 | 5 | $C_2H_4CN$ | 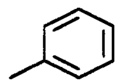 |
| 28 | 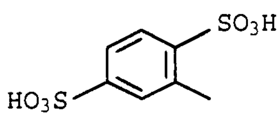 | 5 | $CH_2-SO_3H$ | 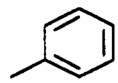 |
| 29 | 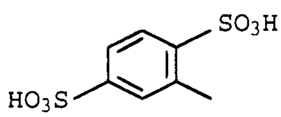 | 5 | $C_2H_4OC_6H_4OH$ | 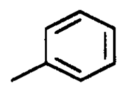 |
| 30 | 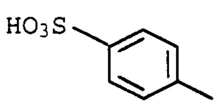 | 5 | $C_2H_5$ | 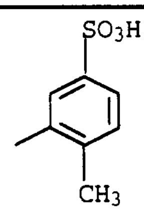 |
| 31 | 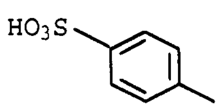 | 4 | $C_2H_5$ | 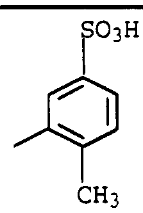 |
| 32 | 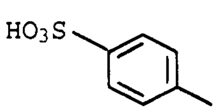 | 5 | $C_2H_5$ | 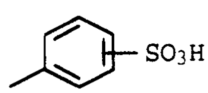 (Isomerengemisch) |

| Bsp. Nr. | D | Ringposition der Aminogruppe | $L^1$ | $L^2$ |
|---|---|---|---|---|
| 33 | 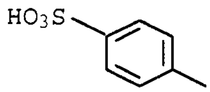 | 5 | $CH_3$ | 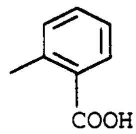 |
| 34 | 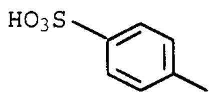 | 5 | $C_2H_5$ | 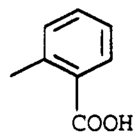 |
| 35 | 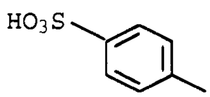 | 4 | $CH_3$ | 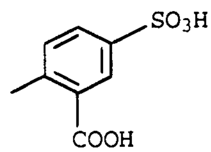 |
| 36 | 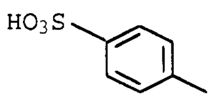 | 5 | H | 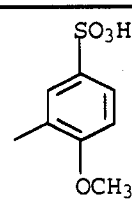 |
| 37 | 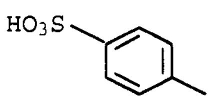 | 5 | H | 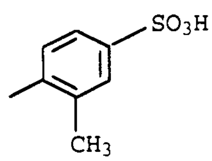 |
| 38 | 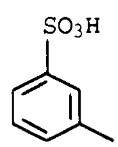 | 5 | $C_2H_5$ | 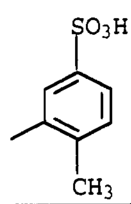 |
| 39 | 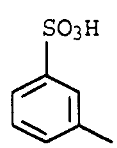 | 5 | $C_2H_5$ | 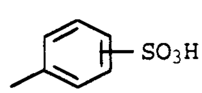 (Isomerengemisch) |

| Bsp. Nr. | D | Ringposition der Aminogruppe | $L^1$ | $L^2$ |
|---|---|---|---|---|
| 40 | 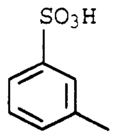 | 5 | $C_2H_5$ | 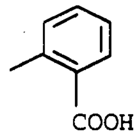 |
| 41 | 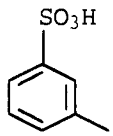 | 4 | $CH_3$ | 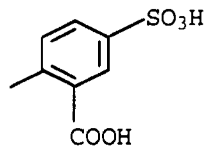 |
| 42 | 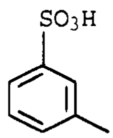 | 5 | H | 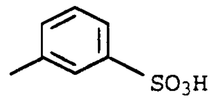 |
| 43 | 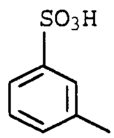 | 5 | H | 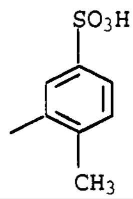 |
| 44 | 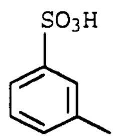 | 4 | $C_2H_5$ | 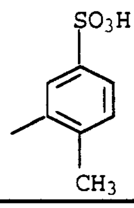 |
| 45 | 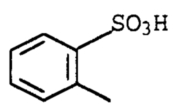 | 5 | $C_2H_5$ | 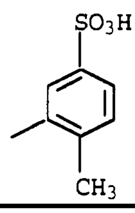 |
| 46 | 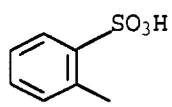 | 5 | H | 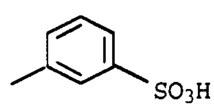 |

| Bsp. Nr. | D | Ringposition der Aminogruppe | $L^1$ | $L^2$ |
|---|---|---|---|---|
| 47 | 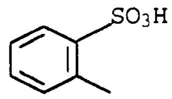 | 5 | H | 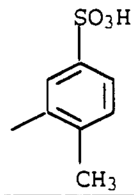 |
| 48 | 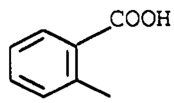 | 5 | $C_2H_5$ | 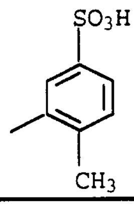 |
| 49 | 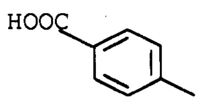 | 5 | $C_2H_5$ | 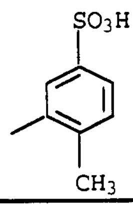 |
| 50 | 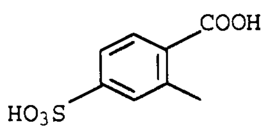 | 5 | $C_2H_5$ | 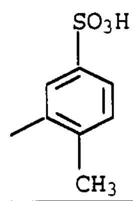 |
| 51 | 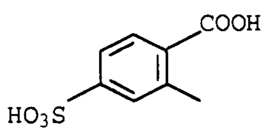 | 4 | $C_2H_5$ | 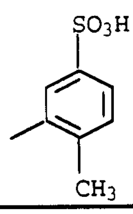 |
| 52 | 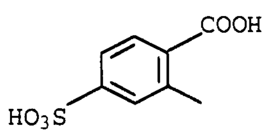 | 5 | $C_2H_5$ | 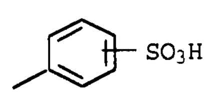 (Isomerengemisch) |
| 53 | 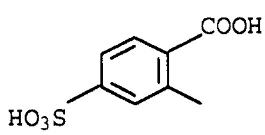 | 5 | H | 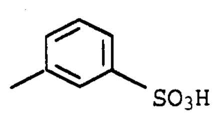 |

| Bsp. Nr. | D | Ringposition der Aminogruppe | $L^1$ | $L^2$ |
|---|---|---|---|---|
| 54 | 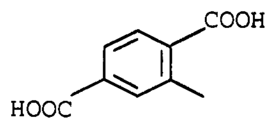 | 5 | $C_2H_5$ | 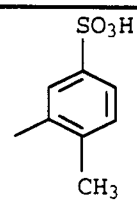 |
| 55 | 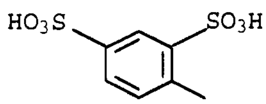 | 5 | $C_2H_5$ | 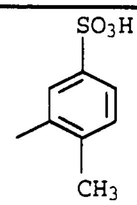 |
| 56 | 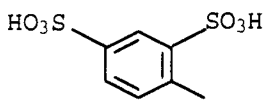 | 4 | $C_2H_5$ | 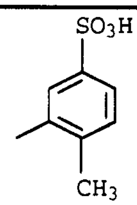 |
| 57 | 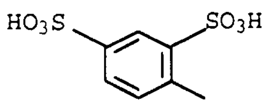 | 5 | $C_2H_5$ | 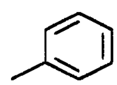 |
| 58 | 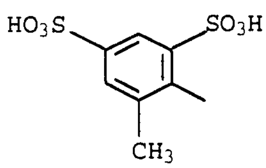 | 5 | $C_2H_5$ | 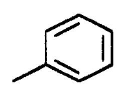 |
| 59 | 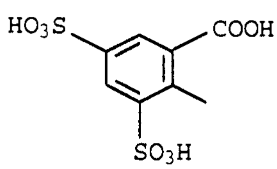 | 5 | $C_2H_5$ | 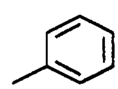 |
| 60 | 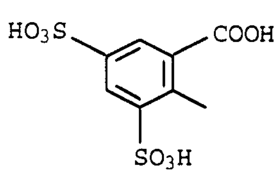 | 4 | $C_2H_5$ | 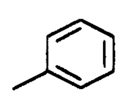 |

Beispiel 61

Die wäßrige Paste aus Beispiel 1a wurde in 250 ml Wasser gelöst und mit 18,5 g 2-(N-Ethyl-N-phenylamino)-4-chlor-6-(3'-amino-4'-hydroxysulfonylphenylamino)triazin versetzt. Mit 10 gew.-%iger wäßriger Natriumhydrogencarbonatlösung wurde ein pH-Wert von 5 eingestellt und 5 h bei 50 °C gerührt. Der Farbstoff der Formel

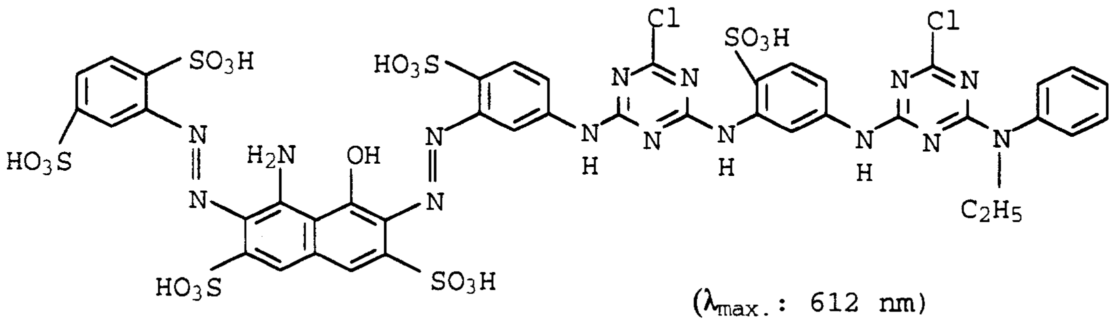

($\lambda_{max.}$: 612 nm)

wurde mit 2500 ml Ethanol gefällt, abgesaugt, mit 85 gew.-%igem wäßrigem Ethanol gewaschen und bei Raumtemperatur unter vermindertem Druck getrocknet. Man erhielt 48 g des Hexanatriumsalzes. Der Farbstoff färbt, nach Reaktivdruckverfahren auf Baumwolle und Zellwolle appliziert, beide Substrate gleich stark in grünstichig blauem Ton mit sehr hohen Fixierraten und guten Gebrauchsechtheiten.

Die Farbstoffe der Tabelle 2, erhalten nach den Herstellungsbedingungen von Beispiel 61, stimmen in den Nuancen und den Echtheitseigenschaften mit den Produkten der Beispiele 1 bis 60 überein, sind jedoch überwiegend etwas weniger substantiv.

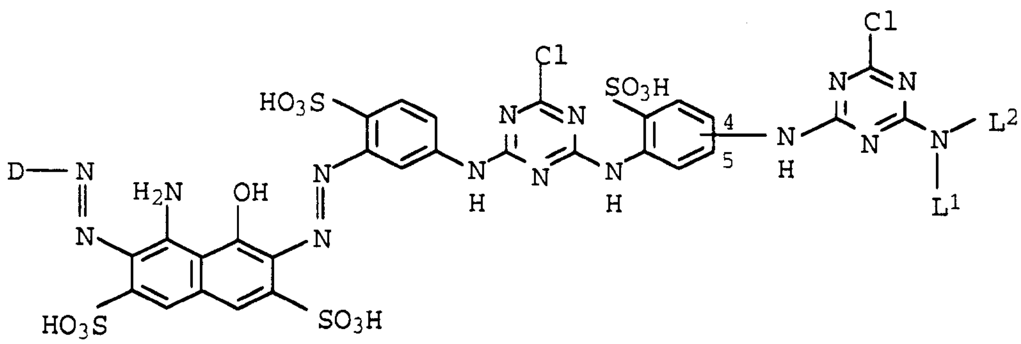

Tabelle 2

| Bsp. Nr. | D | Ringposition der Aminogruppe | $L^1$ | $L^2$ |
|---|---|---|---|---|
| 62 | 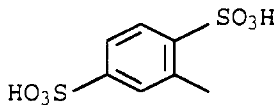 | 5 | $C_2H_5$ | 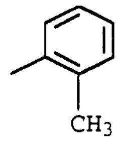 |
| 63 | 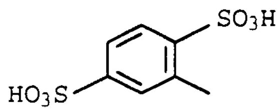 | 5 | $CH_3$ | 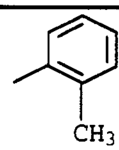 |
| 64 | 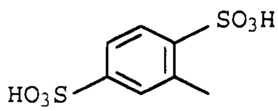 | 4 | $C_2H_5$ | 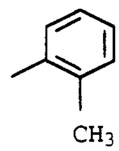 |
| 65 | 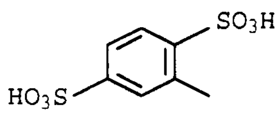 | 4 | $C_2H_5$ | 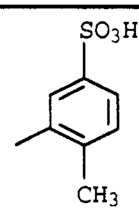 |
| 66 | 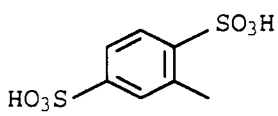 | 5 | $C_2H_5$ | 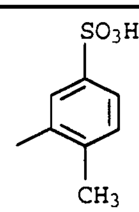 |
| 67 | 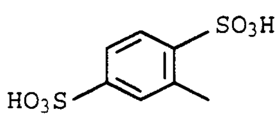 | 5 | $C_2H_4OCH_3$ | 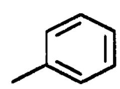 |
| 68 | 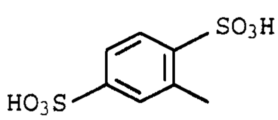 | 5 | $CH_3$ | 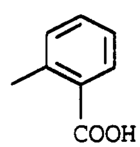 |

| Bsp. Nr. | D | Ringposition der Aminogruppe | $L^1$ | $L^2$ |
|---|---|---|---|---|
| 69 | 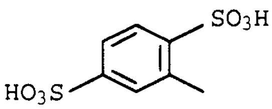 | 4 | $C_2H_5$ | 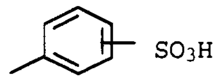 (Isomerengemisch) |
| 70 | 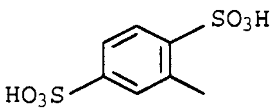 | 5 | H | 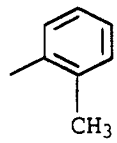 |
| 71 | 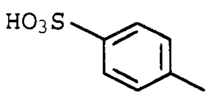 | 5 | $C_2H_5$ | 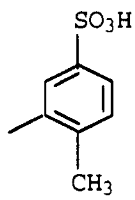 |
| 72 | 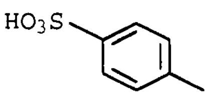 | 4 | $C_2H_5$ | 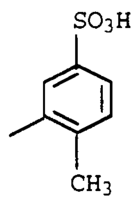 |
| 73 | 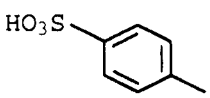 | 5 | $C_2H_5$ | 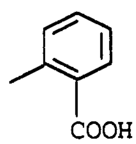 |
| 74 | 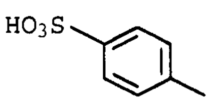 | 5 | $C_2H_5$ | 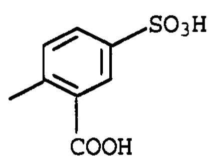 |
| 75 | 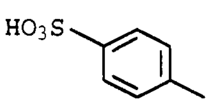 | 4 | $C_2H_5$ | 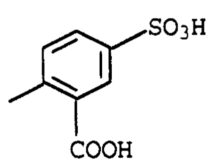 |

| Bsp. Nr. | D | Ringposition der Aminogruppe | $L^1$ | $L^2$ |
| --- | --- | --- | --- | --- |
| 76 | 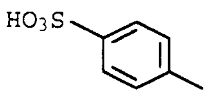 | 4 | $C_2H_5$ | 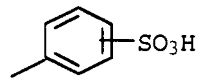 (Isomerengemisch) |
| 77 | 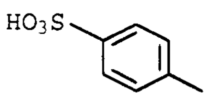 | 5 | $C_2H_5$ | 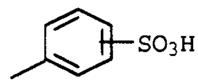 (Isomerengemisch) |
| 78 | 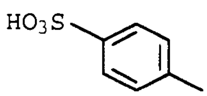 | 5 | H | 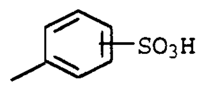 (Isomerengemisch) |
| 79 | 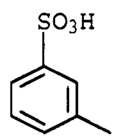 | 5 | $C_2H_5$ | 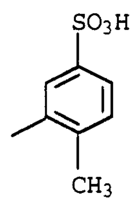 |
| 80 | 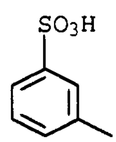 | 5 | $C_2H_5$ | 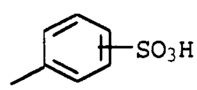 (Isomerengemisch) |
| 81 | 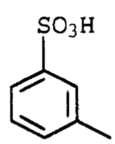 | 5 | $C_2H_5$ | 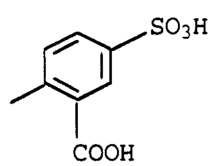 |
| 82 | 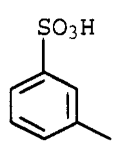 | 4 | H | 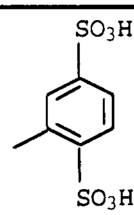 |

| Bsp. Nr. | D | Ringposition der Aminogruppe | $L^1$ | $L^2$ |
|---|---|---|---|---|
| 83 | 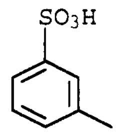 | 5 | $C_2H_5$ | 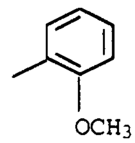 |
| 84 | 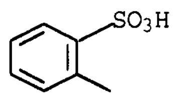 | 5 | $C_2H_5$ | 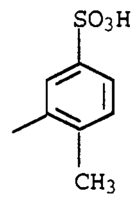 |
| 85 | 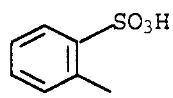 | 5 | H | 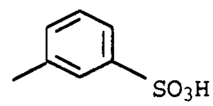 |
| 86 | 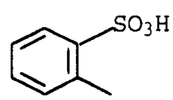 | 5 | H | 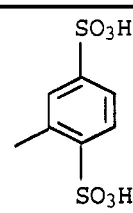 |
| 87 | 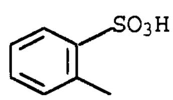 | 5 | $C_2H_5$ | 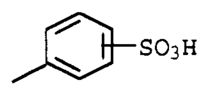 (Isomerengemisch) |
| 88 | 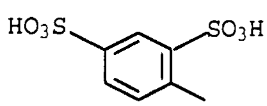 | 5 | $C_2H_5$ | 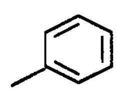 |
| 89 | 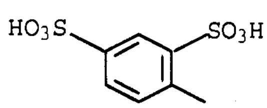 | 5 | $CH_3$ | 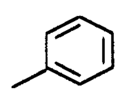 |

Beispiel 90

a) 273 g 3-N-Methylaminoanilin-4-sulfonsäure-Natriumsalz (feucht, berechnet als 100 %) wurden in 750 ml Wasser gelöst. Bei 5 bis 10°C ließ man diese Lösung in eine Aufschlämmung von 203 g

Cyanurchlorid in 1000 ml Eiswasser so einlaufen, daß ein pH-Wert von 2 nicht überschritten wurde. Als das Anilin vollständig acyliert war, wurde eine Lösung von 133 g N-Ethylanilin in 750 ml Aceton zugegeben und mit Natriumhydrogencarbonat der pH-Wert auf 5 angehoben. Nach Rühren über Nacht bei Raumtemperatur und einem pH-Wert von 5, wobei das Aceton weitgehend verdampfte, wurde das Produkt der Formel

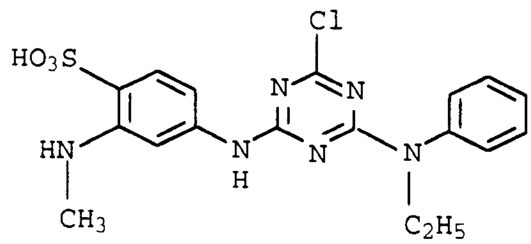

abgesaugt und als Paste weiterverarbeitet.

b) 19,2 g des unter a) beschriebenen Produktes wurden mit der Farbstoffpaste des Beispiels 1a in 300 ml Wasser verrührt. Mit 10 gew.-%iger wäßriger Natriumhydrogencarbonatlösung stellte man einen pH-Wert von 5 ein und rührte 3 h bei 60 °C nach. Nach beendeter Umsetzung wurde der Farbstoff der Formel

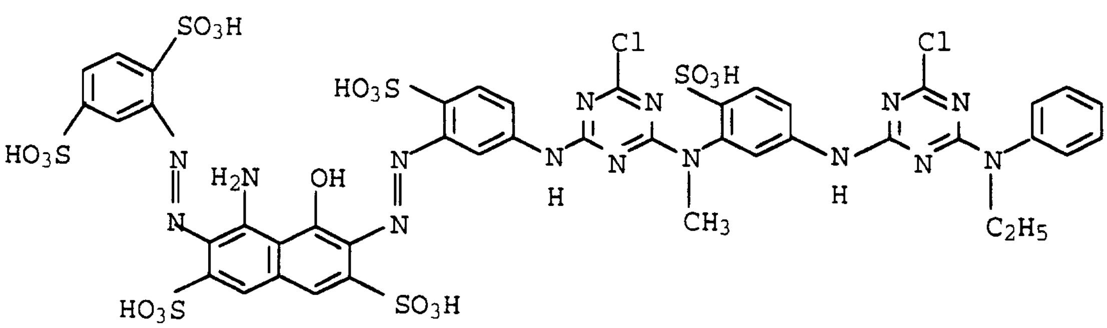

mit 1800 ml Ethanol gefällt, abgesaugt, mit 85 gew.-%igem wäßrigem Ethanol gewaschen und bei Raumtemperatur unter vermindertem Druck getrocknet. Man erhielt 47 g des Farbstoffs als Hexanatriumsalz mit guten technischen und Echtheitseigenschaften.

In analoger Weise werden die in der folgenden Tabelle aufgeführten Farbstoffe erhalten. Sie besitzen ein vergleichbares Eigenschaftsprofil.

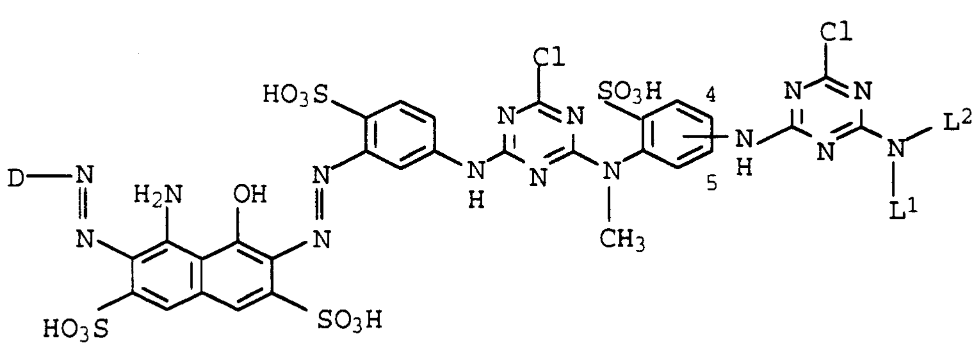

Tabelle 3

| Bsp. Nr. | D | Ringposition der Aminogruppe | $L^1$ | $L^2$ |
|---|---|---|---|---|
| 91 | 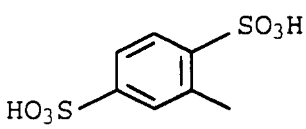 | 5 | $CH_3$ | 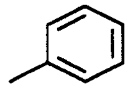 |
| 92 | 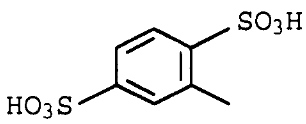 | 5 | H | 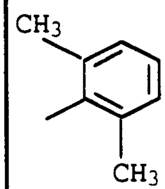 |
| 93 | 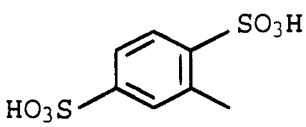 | 5 | $C_2H_4OCH_3$ | 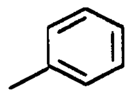 |
| 94 | 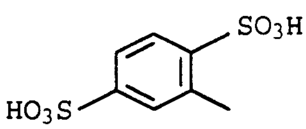 | 4 | $C_2H_5$ | 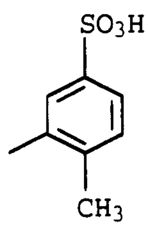 |

| Bsp. Nr. | D | Ringposition der Aminogruppe | $L^1$ | $L^2$ |
|---|---|---|---|---|
| 95 | 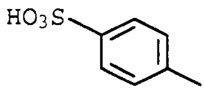 | 5 | $C_2H_5$ | 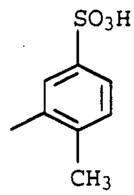 |
| 96 | 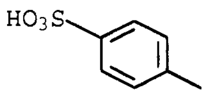 | 4 | $C_2H_5$ | 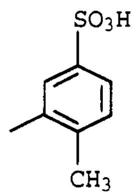 |
| 97 | 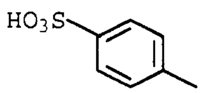 | 4 | $CH_3$ | 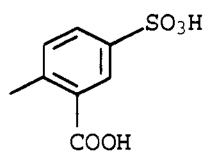 |
| 98 | 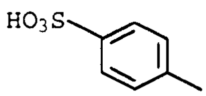 | 5 | $C_2H_5$ | 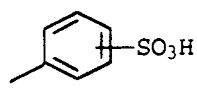 (Isomerengemisch) |
| 99 | 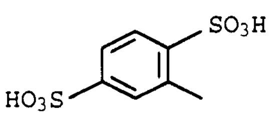 | 5 | H | H |
| 100 | 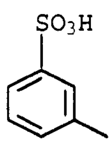 | 5 | $C_2H_5$ | 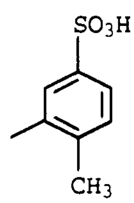 |
| 101 | 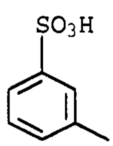 | 5 | $C_2H_5$ | 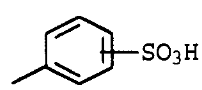 (Isomerengemisch) |

| Bsp. Nr. | D | Ringposition der Aminogruppe | $L^1$ | $L^2$ |
|---|---|---|---|---|
| 102 | 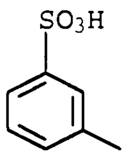 | 5 | H | 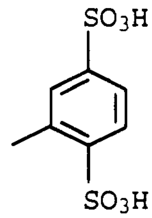 |
| 103 | 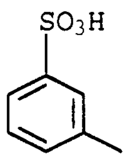 | 4 | H | 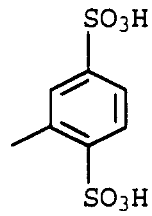 |
| 104 | 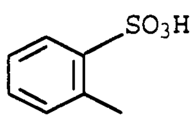 | 5 | $C_2H_5$ | 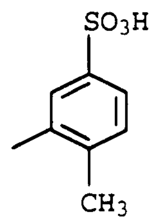 |
| 105 | 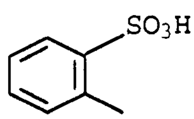 | 5 | H | 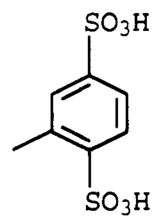 |
| 106 | 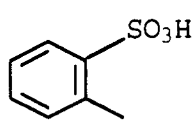 | 5 | H | 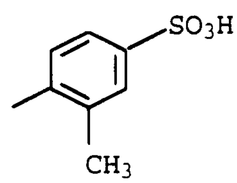 |

Beispiel 107

Man verfuhr analog Beispiel 1b, verwendete jedoch anstatt 3-Aminoanilin-4-sulfonsäure 10 g 3-N-Methylaminoanilin-4-sulfonsäure und verfuhr dann gemäß Beispiel 1c. Man erhielt den Farbstoff der Formel

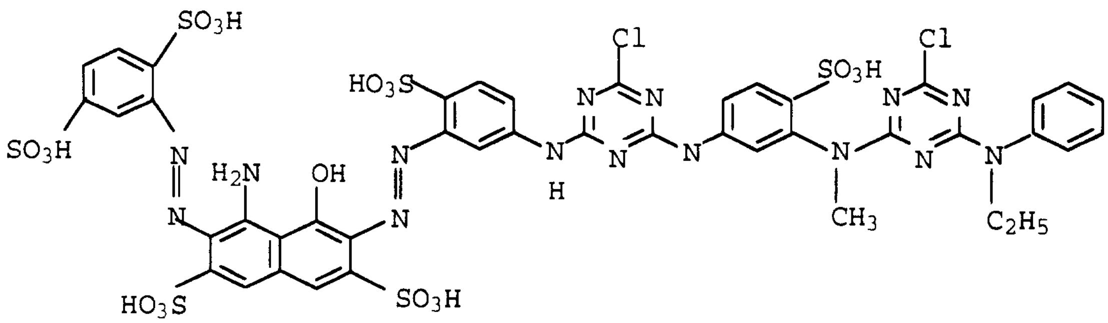

der vorteilhafte Eigenschaften aufweist. Analog werden die in Tabelle 4 aufgeführten Farbstoffe der Formel

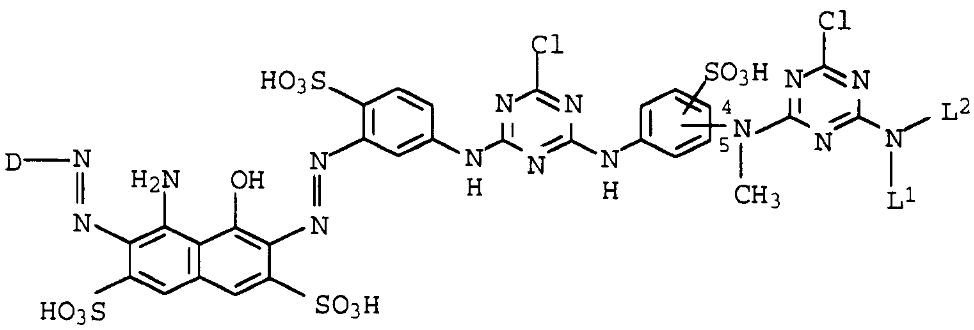

erhalten, die ebenfalls günstige Eigenschaften aufweisen.

Die Sulfonsäure- und die Aminogruppe besetzen alternierend die Ringpositionen 4 und 5.

Tabelle 4

| Bsp. Nr. | D | Ringposition der Aminogruppe | $L^1$ | $L^2$ |
|---|---|---|---|---|
| 108 | 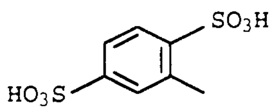 | 5 | $CH_3$ | 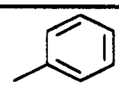 |
| 109 | 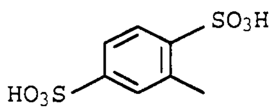 | 4 | $C_2H_5$ | 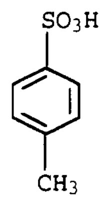 |
| 110 | 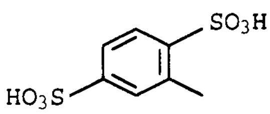 | 4 | $C_2H_5$ | 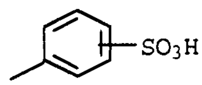 (Isomerengemisch) |
| 111 | 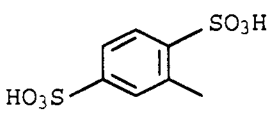 | 5 | $C_2H_5$ | 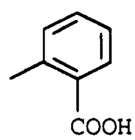 |
| 112 | 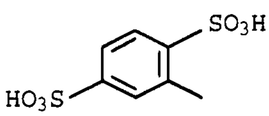 | 4 | $C_2H_5$ | 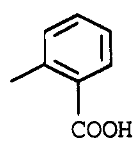 |
| 113 | 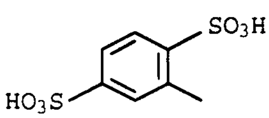 | 4 | H | 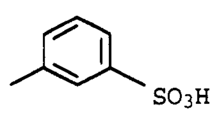 |
| 114 | 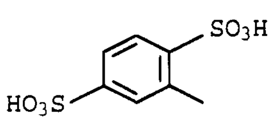 | 5 | H | 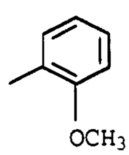 |

| Bsp. Nr. | D | Ringposition der Aminogruppe | $L^1$ | $L^2$ |
|---|---|---|---|---|
| 115 | 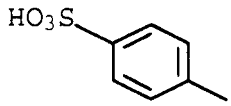 | 4 | $C_2H_5$ | 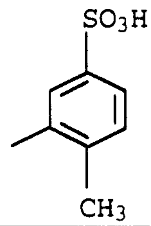 |
| 116 | 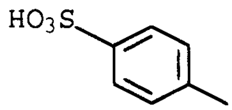 | 5 | $C_2H_5$ | 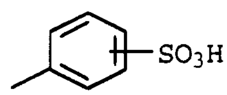 (Isomerengemisch) |
| 117 | 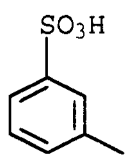 | 5 | $C_2H_5$ | 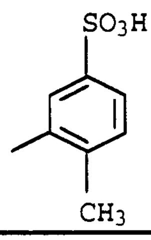 |
| 118 | 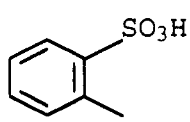 | 5 | $C_2H_5$ | 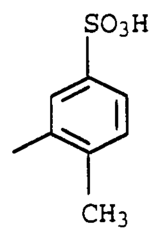 |
| 119 | 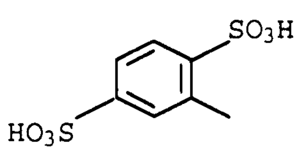 | 5 | $CH_3$ | H |

Beispiel 120

26,8 g 3-Aminoanilin-4,6-disulfonsäure-Natriumsalz (feucht, berechnet als 100 %) wurden in 500 ml Wasser gelöst und mit 30 ml 30 gew.-%iger Salzsäure versetzt. Zur gekühlten Lösung tropfte man nach Zusatz von 100 g Eis 62 ml 1,67 N wäßrige Natriumnitritlösung. Die erhaltene Suspension des Diazoniumbetains goß man zur Lösung des Natriumsalzes von 57 g 1-Amino-2-(4-hydroxysulfonylphenylazo)-8-hydroxynaphthalin-3,6-disulfonsäure in 500 ml Wasser und stellte mit Natriumhydrogencarbonat einen pH-Wert von 4 ein. Zu der resultierenden Lösung goß man die Dispersion von 20 g Cyanurchlorid in 400 ml Eiswasser und stellte mit Natriumhydrogencarbonat bei ca. 15 °C einen pH-Wert von 3,5 ein. Nach vierstündigem Rühren unter diesen Bedingungen wurde der Farbstoff der Formel

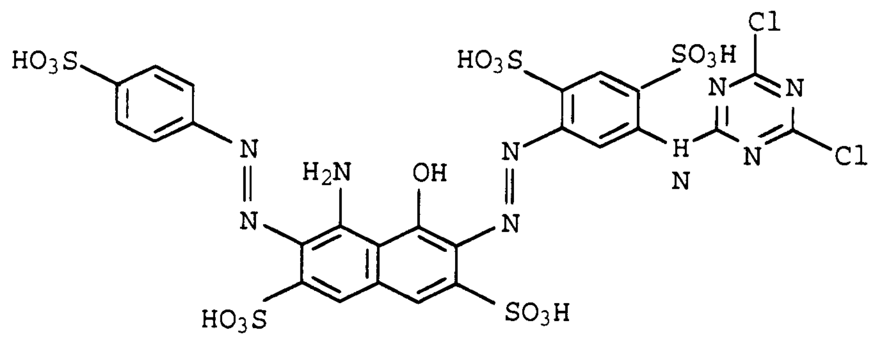

durch Sättigen mit Kalumchlorid gefällt und abgesaugt.

Die Hälfte der erhaltenen wäßrigen Paste wurde nun gemäß den Beispielen 1b und 1c nacheinander mit 3-Aminoanilin-4-sulfonsäure, Cyanurchlorid und N-Ethylanilin umgesetzt und die Syntheselösung sprühgetrocknet. Man erhielt den salzhaltigen Farbstoff der Formel

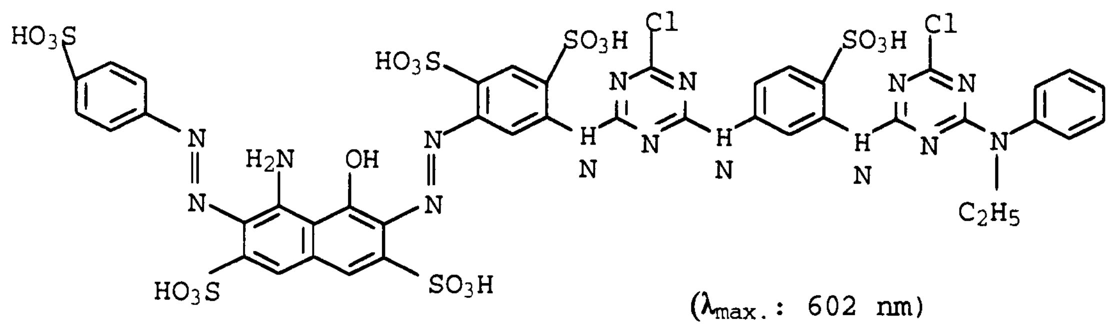

($\lambda_{max.}$: 602 nm)

Seine Echtheitseigenschaften sind denen des Farbstoffs aus Beispiel 1 vergleichbar, jedoch weist der Farbstoff des Beispiels 120 einen deutlich röteren Farbton auf.

In analoger Weise werden die in der folgenden Tabelle 5 aufgeführten Farbstoffe erhalten.

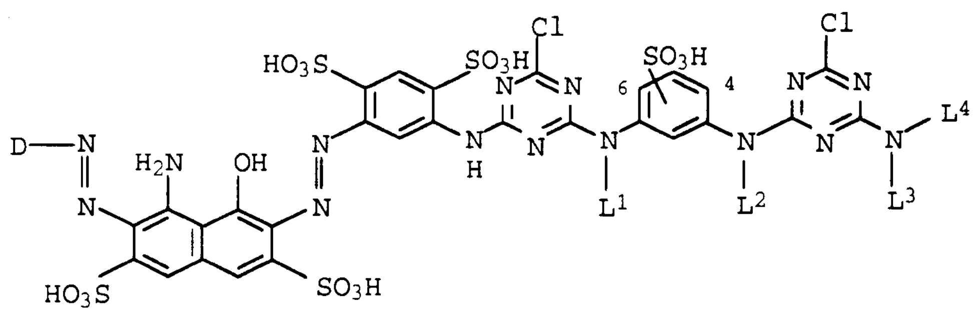

Tabelle 5

| Bsp. Nr. | D | $L^1$ | $L^2$ | $L^3$ | Ringposition von $SO_3H$ | $L^4$ |
|---|---|---|---|---|---|---|
| 121 | 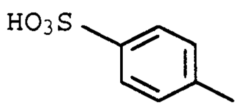 | H | H | $CH_3$ | 4 | 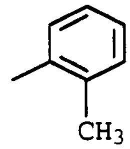 |
| 122 | 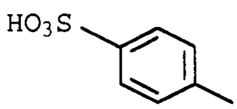 | H | H | $CH_3$ | 4 | 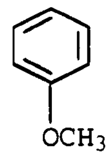 |
| 123 | 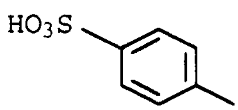 | H | H | $CH_3$ | 4 | 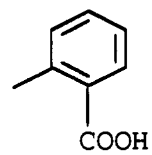 |
| 124 | 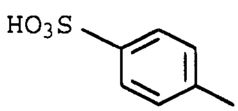 | H | H | $C_2H_5$ | 4 | 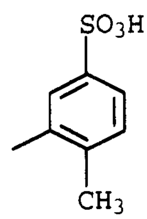 |
| 125 | 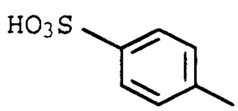 | $CH_3$ | H | $C_2H_5$ | 4 | 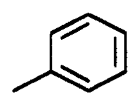 |

| Bsp. Nr. | D | $L^1$ | $L^2$ | $L^3$ | Ringposition von $SO_3H$ | $L^4$ |
|---|---|---|---|---|---|---|
| 126 | 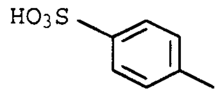 | $CH_3$ | H | $C_2H_5$ | 6 | 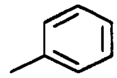 |
| 127 | 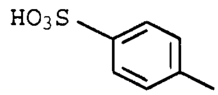 | H | $CH_3$ | $CH_3$ | 4 | 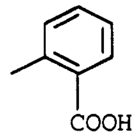 |
| 128 | 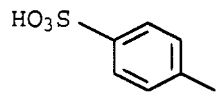 | H | H | $CH_3$ | 6 | 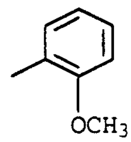 |
| 129 | 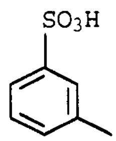 | H | H | $C_2H_5$ | 4 | 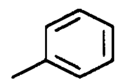 |
| 130 | 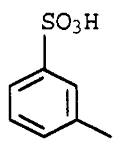 | H | H | $C_2H_5$ | 6 | 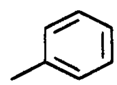 |
| 131 | 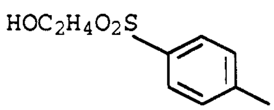 | H | H | $C_2H_5$ | 6 | 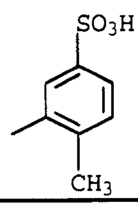 |
| 132 | 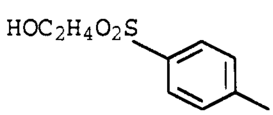 | H | H | $C_2H_5$ | 4 | 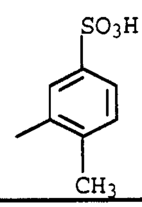 |

| Bsp. Nr. | D | $L^1$ | $L^2$ | $L^3$ | Ringposition von $SO_3H$ | $L^4$ |
|---|---|---|---|---|---|---|
| 133 | 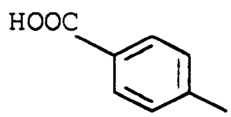 | H | H | $C_2H_5$ | 6 | 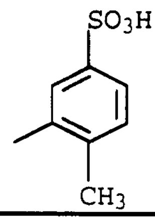 |
| 134 | 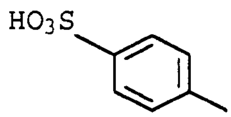 | H | $CH_3$ | $CH_3$ | 4 | 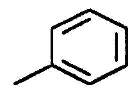 |
| 135 | 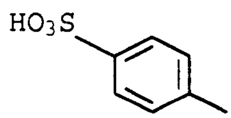 | H | $CH_3$ | $CH_3$ | 6 | 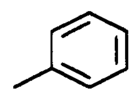 |
| 136 | 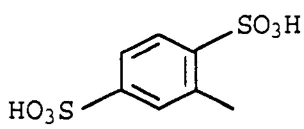 | H | H | H | 4 | H |

Beispiel 137

a) 20,2 g 3-N-Methylaminoanilin-4-sulfonsäure-Natriumsalz (feucht, berechnet als 100 %) wurden in 300 ml Wasser gelöst, von außen und durch Zusatz von 100 g Eis gekühlt und zunächst mit 50 ml 30 gew.-%iger Salzsäure, dann tropfenweise mit 60 ml 3,33 N wäßriger Natriumnitritlösung versetzt. Nach zweistündigem Rühren bei 0 bis 5 °C wurde der Überschuß an salpetriger Säure zerstört und die Dispersion des Diazoniumbetains zur Lösung von 57 g 1-Amino-2-(4'-hydroxysulfonylphenylazo)-8-hydroxynaphthalin-3,6-disulfonsäure-Dinatriumsalz in 250 ml Wasser gegossen. Langsamer Zusatz einer gesättigten Natriumacetatlösung bis zu einem pH-Wert von 4,5 beendete die Kupplung. Durch Zugabe von 20 g Amidosulfonsäure und einstündiges Nachrühren bei Raumtemperatur wurde ebenfalls gebildete Nitrosoverbindung zerstört. Zur resultierenden Lösung goß man die Aufschlämmung von 20,3 g Cyanurchlorid in 250 ml Eiswasser und stellte mit Natriumhydrogencarbonat einen pH-Wert von 5 bis 6 ein. Nach ca. dreistündigem Rühren bis Raumtemperatur war die Acylierung beendet. Der Farbstoff der Formel

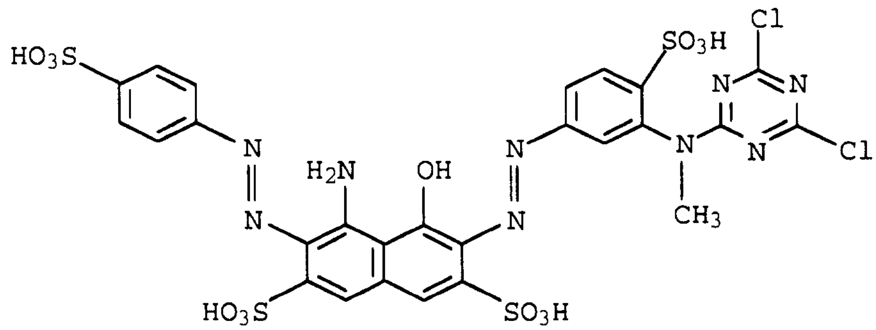

wurde mit Kochsalz gefällt und abgesaugt.

b) Das gesamte Nutschgut des Disazofarbstoffes wurde entsprechend den Bedingungen der Beispiele 1b und 1c mit 19,0 g 3-Aminoanilin-4-sulfonsäure, 20,0 g Cyanurchlorid und 22 g 2-N-Ethyltoluidin-4-sulfonsäure umgesetzt und ergab so den Farbstoff der Formel

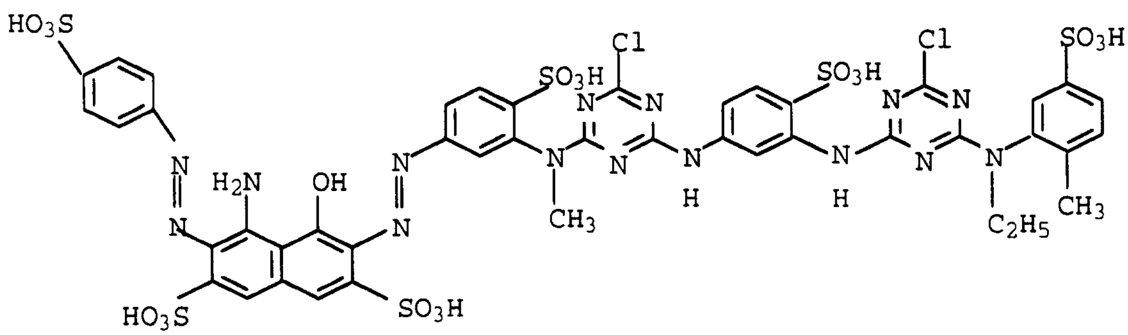

Es eignet sich sehr gut für den Druck von Baumwolle und von Zellwollmaterialien.

In analoger Weise werden die in der folgenden Tabelle 6 aufgeführten Farbstoffe erhalten.

Die Sulfonsäure- und die Aminogruppe besetzen alternierend die Ringpositionen 4 und 5.

Tabelle 6

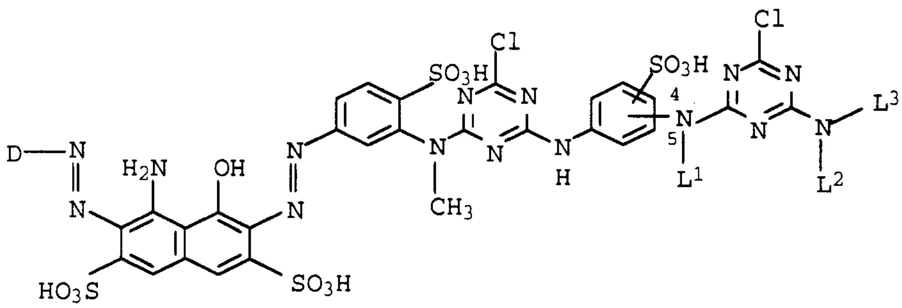

| Bsp. Nr. | D | $L^1$ | $L^2$ | Ringposition der Aminogruppe | $L^3$ |
|---|---|---|---|---|---|
| 138 | 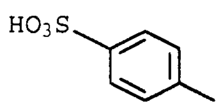 | H | H | 5 | 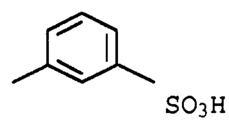 |
| 139 | 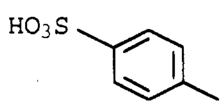 | H | H | 4 | 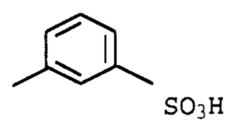 |
| 140 | 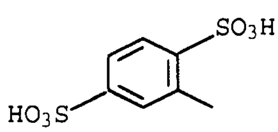 | H | H | 5 | H |
| 141 | 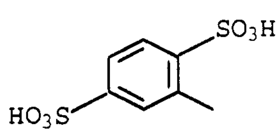 | H | $C_2H_5$ | 5 | H |
| 142 | 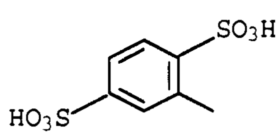 | H | $C_2H_5$ | 5 | 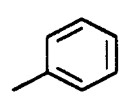 |

| Bsp. Nr. | D | $L^1$ | $L^2$ | Ringposition der Aminogruppe | $L^3$ |
|---|---|---|---|---|---|
| 143 | 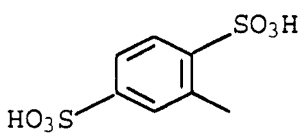 | $CH_3$ | H | 4 | 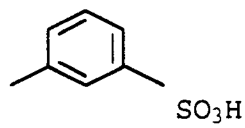 |
| 144 | 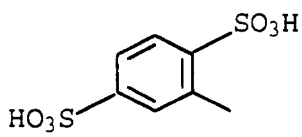 | $CH_3$ | $CH_3$ | 5 | 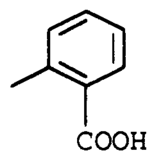 |
| 145 | 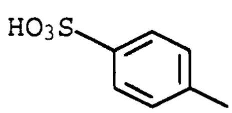 | H | $C_2H_5$ | 5 | 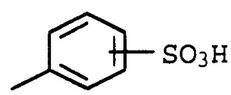 (Isomerengemisch) |
| 146 | 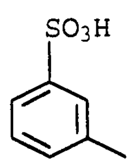 | H | $C_2H_5$ | 5 | 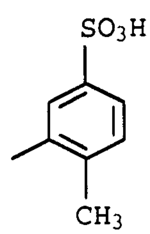 |
| 147 | 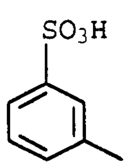 | H | $C_2H_5$ | 4 | 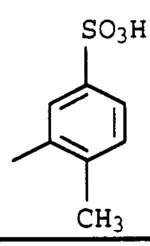 |
| 148 | 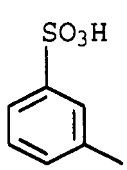 | H | H | 5 | 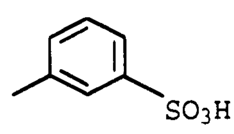 |

| Bsp. Nr. | D | $L^1$ | $L^2$ | Ringposition der Aminogruppe | $L^3$ |
|---|---|---|---|---|---|
| 149 | 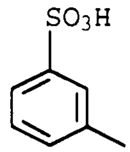 | H | $C_2H_5$ | 4 | 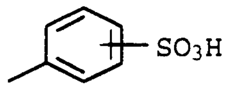 (Isomerengemisch) |
| 150 | 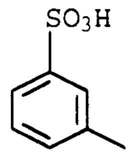 | H | $C_2H_5$ | 4 | 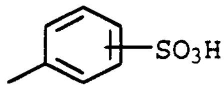 (Isomerengemisch) |

Beispiel 151

Die wäßrige Paste aus Beispiel 137a wurde in 350 ml Wasser gelöst und mit 38 g 2-(N-Ethyl-N-phenylamino)-4-chlor-6-(3'-amino-4-hydroxysulfonylphenylamino)triazin versetzt. Nach den Synthesebedingungen des Beispiels 61 wurde der Farbstoff der Formel

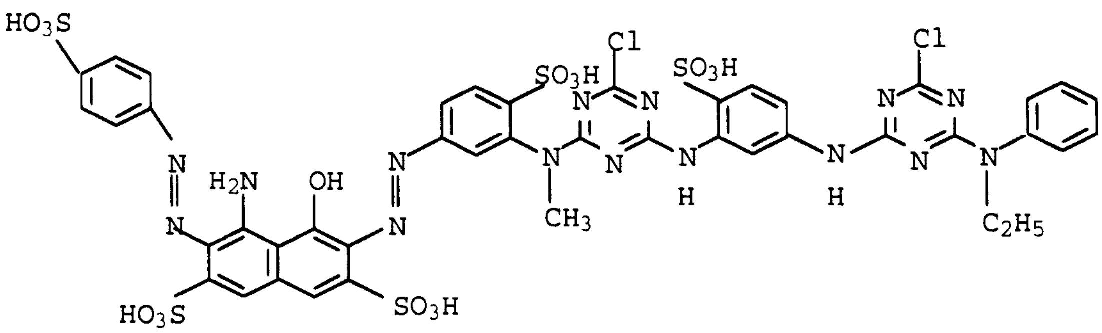

erhalten, der Baumwolle und Zellwolle nach den üblichen Reaktivdruckverfahren mit vergleichbarer Farbstärke und mit hoher Fixierausbeute in rotstichigem Blauton bedruckt und gute Gebrauchsechtheiten aufweist.

Die Farbstoffe der Tabelle 7, die vergleichbare Eigenschaften aufweisen, werden auf analoge Weise erhalten.

Tabelle 7

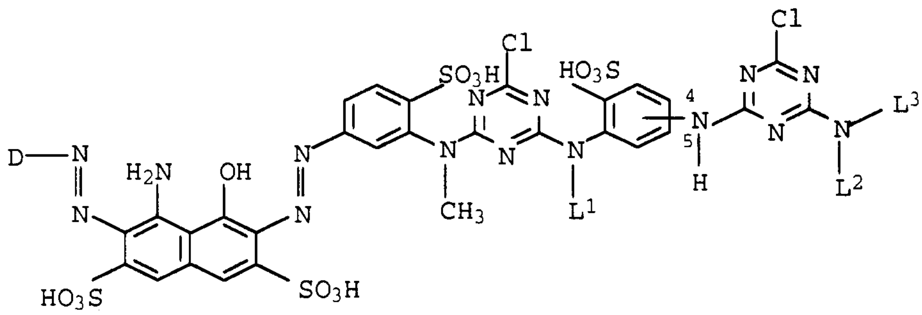

| Bsp. Nr. | D | $L^1$ | $L^2$ | $L^3$ | Ringposition der Aminogruppe |
|---|---|---|---|---|---|
| 152 | 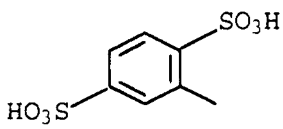 | H | $C_2H_5$ | 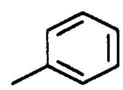 | 5 |
| 153 | 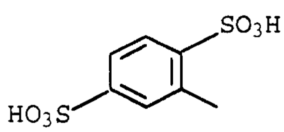 | H | $C_2H_5$ | 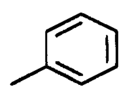 | 4 |
| 154 | 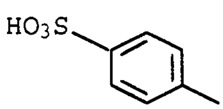 | $CH_3$ | $C_2H_5$ | 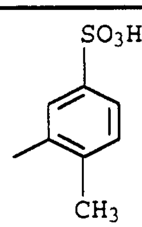 | 5 |
| 155 | 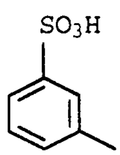 | H | H | 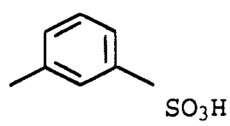 | 4 |
| 156 | 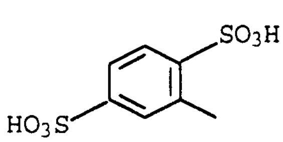 | H | H | H | 5 |

| Bsp. Nr. | D | $L^1$ | $L^2$ | $L^3$ | Ringposition der Aminogruppe |
|---|---|---|---|---|---|
| 157 | 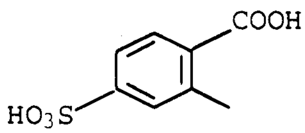 | H | $CH_3$ | 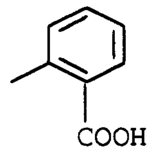 | 4 |
| 158 | 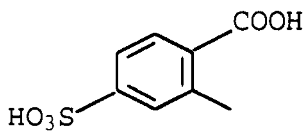 | H | $C_2H_5$ | 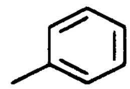 | 4 |
| 159 | 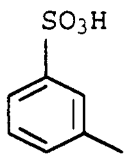 | H | $C_2H_5$ | 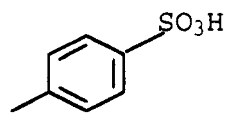 | 4 |
| 160 | 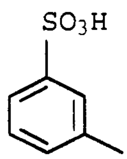 | H | $C_2H_5$ | 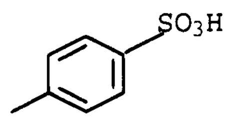 | 5 |
| 161 | 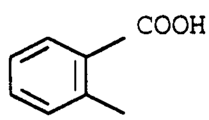 | $CH_3$ | H | 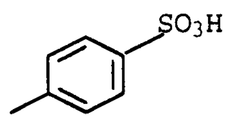 | 5 |
| 162 | 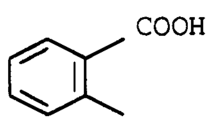 | $CH_3$ | H | 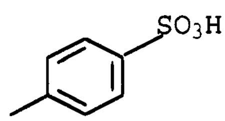 | 4 |

Beispiel 163

Der in Beispiel 1c als Zwischenprodukt angefallene Farbstoff der Formel

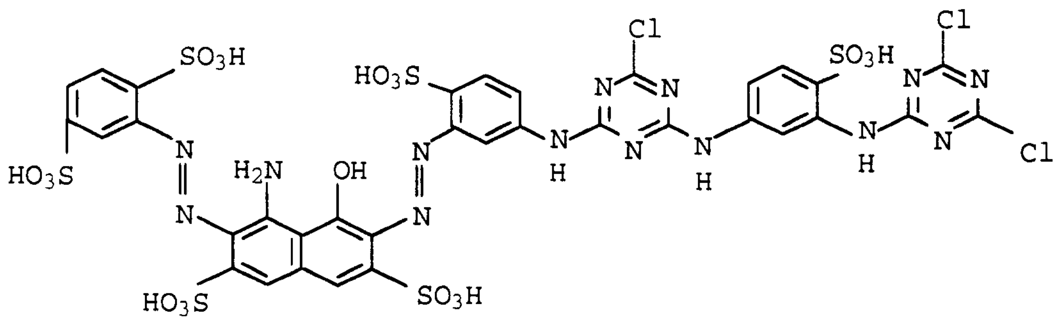

wurde mit 1500 ml Ethanol aus wäßriger Lösung gefällt, abgesaugt, mit 80 gew.-%igem wäßrigen Ethanol gewaschen und bei Raumtemperatur unter vermindertem Druck getrocknet.

Ausbeute: 23 g (Der Farbstoff enthält neben wenig Kochsalz noch geringe Mengen an Farbstoffhydrolysat.)

Mit dem Farbstoff können Baumwolle und Zellwolle in gleicher Farbstärke bedruckt werden. Eine Abfärbung auf den Weißfonds findet dabei nicht statt.

Auf vergleichbare Weise werden die in Tabelle 8 aufgeführten Farbstoffe erhalten. Sie zeichnen sich, wie auch der Farbstoff aus Beispiel 163, durch hohe Fixierraten aus.

Die Sulfonsäure- und die Aminogruppe besetzen alternierend die Ringpositionen 4 und 5.

Tabelle 8

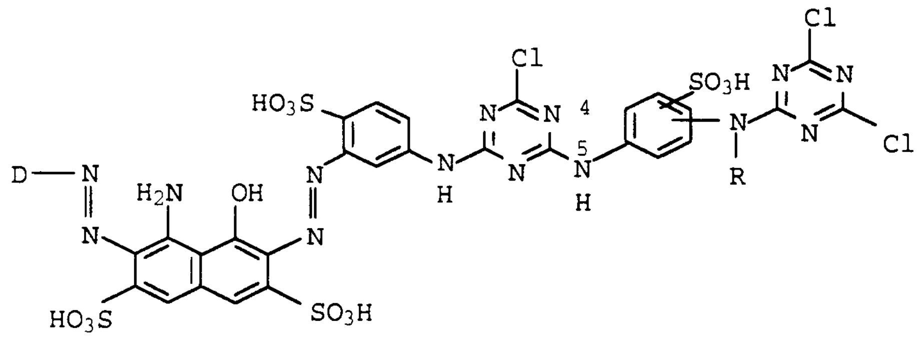

| Bsp. Nr. | D | Ringposition von $SO_3H$ | R |
|---|---|---|---|
| 164 | 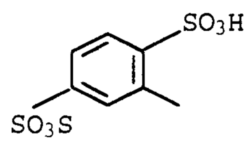 | 4 | $CH_3$ |
| 165 | 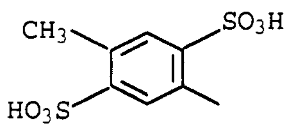 | 4 | H |
| 166 | 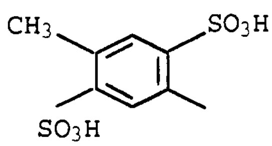 | 4 | $CH_3$ |
| 167 | 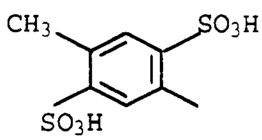 | 5 | $CH_3$ |
| 168 | 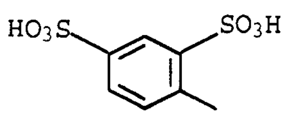 | 4 | H |

| Bsp. Nr. | D | Ringposition von $SO_3H$ | R |
|---|---|---|---|
| 169 | 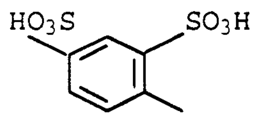 | 4 | $CH_3$ |
| 170 | 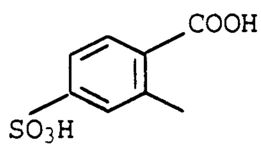 | 4 | $CH_3$ |
| 171 | 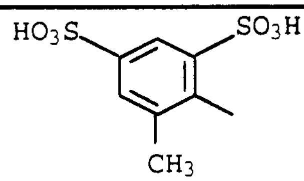 | 4 | H |
| 172 | 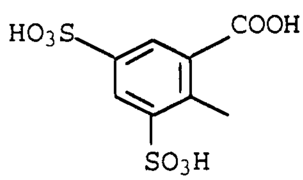 | 4 | H |
| 173 | 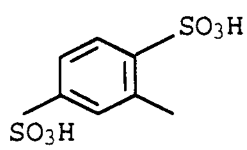 | 5 | $CH_3$ |

## Patentansprüche

**1.** Disazofarbstoffe der Formel I

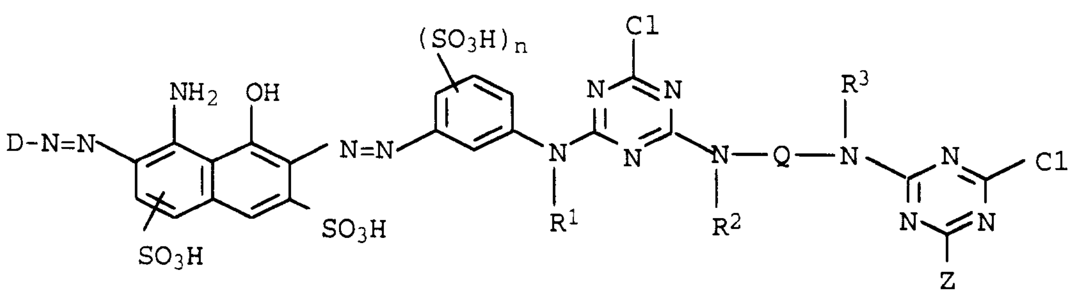

(I),

in der

n 0,1 oder 2,

D gegebenenfalls sübstituiertes Phenyl oder gegebenenfalls sübstituiertes Naphthyl, wobei beide Reste frei sind von faserreaktiven Gruppen,

$R^1$, $R^2$ und $R^3$ unabhängig voneinander jeweils Wasserstoff oder gegebenenfalls sübstituiertes $C_1$-$C_4$-Alkyl,

Z Chlor oder einen Rest der Formel $NR^4R^5$, worin $R^4$ für Wasserstoff oder gegebenenfalls sübstituiertes $C_1$-$C_4$-Alkyl und $R^5$ für Wasserstoff, gegebenenfalls substituiertes $C_1$-$C_4$-Alkyl oder gegebenenfalls substituiertes Phenyl stehen, und

Q einen Rest der Formel

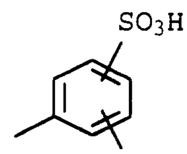

bedeuten,

mit der Maßgabe, daß

a) fünf bis sieben wasserlöslich machende Gruppen im Molekül vorhanden sind und

b) wenn Z den Rest $NR^4R^5$, $R^3$ gegebenenfalls substituiertes $C_1$-$C_4$-Alkyl und $R^1$, $R^2$ und $R^4$ jeweils Wasserstoff bedeuten, der Rest $NR^2$-Q-$NR^3$ nicht die Struktur

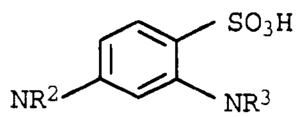

aufweist.

**2.** Disazofarbstoffe nach Anspruch 1, dadurch gekennzeichnet, daß sechs oder sieben wasserlöslich machende Gruppen im Molekül vorhanden sind.

**3.** Disazofarbstoffe nach Anspruch 1, dadurch gekennzeichnet, daß Z einen Rest der Formel $NR^4R^5$ bedeutet.

**4.** Disazofarbstoffe nach Anspruch 1, dadurch gekennzeichnet, daß Z Chlor bedeutet.

**5.** Disazofarbstoffe nach Anspruch 1, dadurch gekennzeichnet, daß $R^1$, $R^2$, $R^3$ und $R^4$ unabhängig voneinander jeweils Wasserstoff oder $C_1$-$C_4$-Alkyl bedeuten.

**6.** Disazofarbstoffe nach Anspruch 1, dadurch gekennzeichnet, daß $R^5$ $C_1$-$C_4$-Alkyl, das gegebenenfalls substituiert ist, oder Phenyl, das gegebenenfalls ein- bis dreifach durch Methyl, Methoxy, Carboxy oder Hydroxysulfonyl substituiert ist, bedeutet.

**7.** Disazofarbstoffe nach Anspruch 1, dadurch gekennzeichnet, daß D gegebenenfalls sübstituiertes Phenyl bedeutet.

**8.** Disazofarbstoffe nach Anspruch 1, die der Formel Ia

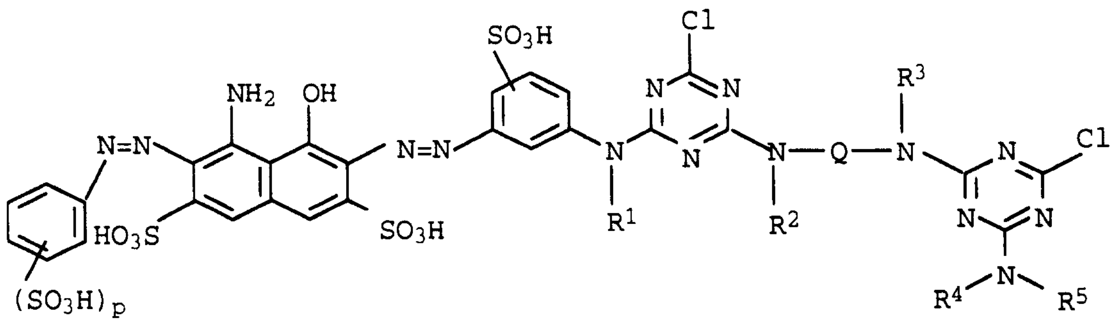

(Ia)

gehorchen, in der p 1 oder 2 bedeutet und Q, $R^1$, $R^2$, $R^3$, $R^4$ und $R^5$ jeweils die in Anspruch 1 genannte Bedeutung besitzen.

**9.** Disazofarbstoffe nach Anspruch 1, die der Formel Ib

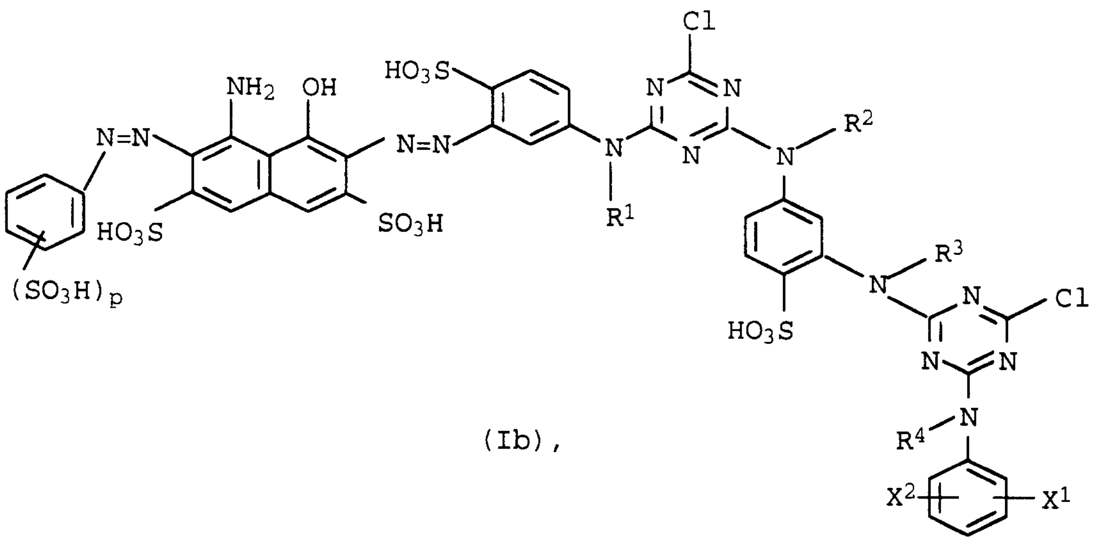

(Ib),

gehorchen, in der p 1 oder 2, $X^1$ Wasserstoff, Carboxy oder Hydroxysulfonyl und $X^2$ Wasserstoff, Methyl, Methoxy, Carboxy oder Hydroxysulfonyl bedeuten und $R^1$, $R^2$, $R^3$ und $R^4$ jeweils die in Anspruch 1 genannte Bedeutung besitzen.

**10.** Verwendung der Disazofarbstoffe gemäß Anspruch 1 zum Bedrucken von cellulosehaltigen Materialien.